(19) Europäisches Patentamt
European Patent Office
Office européen des brevets

(11) **EP 4 105 186 A1**

(12) **EUROPÄISCHE PATENTANMELDUNG**

(43) Veröffentlichungstag:
**21.12.2022   Patentblatt 2022/51**

(21) Anmeldenummer: **22179158.5**

(22) Anmeldetag: **15.06.2022**

(51) Internationale Patentklassifikation (IPC):
**C03C 1/00** $^{(2006.01)}$     **C03B 1/00** $^{(2006.01)}$
**C03C 3/091** $^{(2006.01)}$

(52) Gemeinsame Patentklassifikation (CPC):
**C03C 3/091; C03B 18/12; C03B 18/20; C03C 1/00**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **18.06.2021   DE 102021115903**

(71) Anmelder: **SCHOTT AG
55122 Mainz (DE)**

(72) Erfinder:
• **Fotheringham, Ulrich
65191 Wiesbaden (DE)**
• **Lautenschläger, Gerhard
07749 Jena (DE)**
• **Eichholz, Rainer Erwin
60323 Frankfurt am Main (DE)**
• **Alkemper, Jochen
55270 Klein-Winternheim (DE)**

(74) Vertreter: **Fuchs Patentanwälte Partnerschaft
mbB
Westhafenplatz 1
60327 Frankfurt am Main (DE)**

(54) **VORSPANNUNG EINES FLACHGLASES DURCH ERZEUGUNG EINES GRADIENTEN IN DER OBERFLÄCHLICHEN ZUSAMMENSETZUNG**

(57)    Die Erfindung betrifft Glasartikel, insbesondere Flachgläser, bei denen das oberflächliche Material durch eine gezielte Prozeßführung Gradientenmaterialeigenschaften hat, die wiederum zu einer Druckvorspannung der Oberfläche führen. Die Erfindung betrifft auch ein Verfahren zur Herstellung der Glasartikel sowie deren Verwendung.

EP 4 105 186 A1

**Beschreibung**

Die Erfindung betrifft Glasartikel, beispielsweise Flachgläser, bei denen das oberflächliche Material durch eine gezielte Prozeßführung Gradientenmaterialeigenschaften hat, die wiederum zu einer Druckvorspannung der Oberfläche führen. Die Erfindung betrifft auch ein Verfahren zur Herstellung der Glasartikel sowie deren Verwendung.

Stand der Technik

An der Oberfläche druckvorgespannte Gläser werden für viele Anwendungen benötigt, insbesondere für Anwendungen im Bereich Sicherheitsglas oder generell für Gläser, die gegen mechanische Einwirkungen resistenter sind als unvorgespannte Gläser. Es gibt verschiedene Methoden der Druckvorspannung der Oberflächen von Glasprodukten.

Bei der sogenannten chemischen Vorspannung, siehe u.a. Arun K. Varshneya, Chemical Strengthening of Glass: Lessons Learned and Yet To Be Learned, International Journal of Applied Glass Science 1 [2] 131-142 (2010), werden in der Glasoberfläche befindliche kleinere Ionen, z.B. Natriumionen, gegen größere Ionen, z.B. Kaliumionen, ausgetauscht. Dies resultiert in einer größeren Raumforderung der Oberfläche relativ zum Kernmaterial. Durch den Verbund mit dem Kernmaterial wird die Oberfläche an dieser Ausdehnung gehindert und auf die ursprüngliche Abmessung zusammengedrückt, was in entsprechenden Druckspannungen resultiert. Typischerweise findet der chemische Vorspannprozeß bei hohen Temperaturen, aber noch deutlich unterhalb des oberen Kühlpunktes statt.

Bei der sogenannten thermischen Vorspannung, siehe u.a. Werner Kiefer, Thermisches Vorspannen von Gläsern niedriger Wärmeausdehnung, Glastechnische Berichte 57 (1984), Nr. 9, S. 221-228, wird das Glasprodukt, beispielsweise ein Flachglas, auf eine Temperatur von beispielsweise 100K oberhalb des oberen Kühlpunktes erwärmt und dann schockartig durch Anblasen o.ä. gekühlt. Durch das Wechselspiel von lokal unterschiedlicher Kühlung (an der Oberfläche schnell, im Kern langsam wegen der geringen Wärmeleitfähigkeit von Glas), der daraus sich ergebenden lokal unterschiedlichen thermischen Ausdehnung, dem wiederum daraus folgenden Spannungsaufbau und der diesem Spannungsaufbau folgenden, stark temperaturabhängigen Spannungsrelaxation ergibt sich eine Druckvorspannung an der Oberfläche (thermische Vorspannung).

Nach der Technical Information Exchange No. 32 (TIE-32), Thermal loads on optical glass, Schott AG, Mainz, Deutschland, Oktober 2018, beträgt die oberflächliche Druckspannung $\sigma$ einer thermisch vorgespannten Glasscheibe

$$\sigma = f \cdot \frac{\Delta T \cdot CTE \cdot E}{1-\mu} \qquad (1)$$

Dabei ist E das Elastizitätsmodul, $\mu$ die Poissonzahl und $\Delta T$ die Differenz zwischen der Oberflächentemperatur und der Kerntemperatur der Scheibe in dem Moment, wenn die Kerntemperatur bei der Schockkühlung den oberen Kühlpunkt durchschreitet. CTE ist der thermische Ausdehnungskoeffizient des Glases. "f" ist ein Faktor, der das Verhältnis zwischen der Differenz von Oberflächentemperatur und mittlerer Scheibentemperatur zur Differenz zwischen Oberflächentemperatur und Kerntemperatur wiedergibt. "f" ist in jedem Fall kleiner als "1"; für den Fall, daß sich bis zum Durchschreiten des Glasübergangsbereiches ein "steady state" mit parabelförmigem Temperaturprofil ausgebildet hat, gilt f = 2/3.

Für $\Delta T$ gilt nach Kiefer, loc. cit.:

$$\Delta T = \frac{h \cdot d}{4 \cdot \kappa + h \cdot d} \cdot (T_G - T_{ambient}) \qquad (2)$$

Dabei ist h der Wärmeübergangskoeffizient zwischen der Scheibe und dem Kühlmedium, beispielsweise Blasluft, d die Scheibendicke, $\kappa$ die Wärmeleitfähigkeit des Glases und $T_{ambient}$ die Temperatur des Kühlmediums bzw. die Umgebungstemperatur.

$T_G$ ist eine Diskretisierung des Glasübergangsbereiches in dem Sinne, dass Spannungen oberhalb von $T_G$ relaxieren und unterhalb von $T_G$ nicht mehr. Genau genommen hängt diese Temperatur von der Kühlgeschwindigkeit ab. Der bestgeeignete kühlgeschwindigkeitsunabhängige Schätzwert ist der obere Kühlpunkt. In der Literatur wird an dieser Stelle oft auch die Glastransformationstemperatur verwendet, was keinen großen Fehler bedeutet, da sich oberer Kühlpunkt und Glastransformationstemperatur kaum unterscheiden.

Beide Prozesse, d.h. die chemische und die thermische Vorspannung, sind sowohl für Scheiben als auch andere Glasartikel einsetzbar; die genannten Überlegungen gelten immer für den Fall, daß die Dicke eines jeweils betrachteten Stücks eines solchen Glasartikels klein ist gegen dessen seitliche Abmessungen. Dies ist insbesondere bei Scheiben der Fall. Beide Prozesse erfordern allerdings einen zusätzlichen, mit einer Wiedererwärmung des Glases und erheblichem chemischen oder ingenieurtechnischen Aufwand verbundenen Verfahrensschritt.

Aufgabe

Im Stand der Technik fehlt es an einem Verfahren, mit dem Glasprodukte durch eine Modifikation des Herstellungsverfahrens quasi "inline" an der Oberfläche druckvorgespannt werden können.
Diese Aufgabe wird durch die Gegenstände der Patentansprüche gelöst.

Beschreibung der Erfindung

Eine mögliche Alternative zu den beiden oben beschriebenen Verfahren aus dem Stand der Technik ergibt sich, wenn es gelingt, bei der Herstellung in einer Oberflächenschicht die Zusammensetzung so zu ändern, daß sich dort ein geringerer CTE ergibt als im Inneren. Ebendies wird mit der vorliegenden Erfindung in Abgrenzung zu den beiden oben genannten Verfahren erreicht. Dies schließt nicht aus, dass ein erfindungsgemäßer Glasartikel optional in einem zusätzlichen Schritt nach der Herstellung auch chemisch oder thermisch vorgespannt werden kann. Die Erfindung stellt jedoch im Gegensatz dazu auf die Druckvorspannung an der Oberfläche ab, die durch die bei der Herstellung eingebrachten CTE-Unterschiede zwischen Oberfläche und Kern erreichbar ist.
Unter der Annahme, daß erstens bei einem Abkühlprozeß bis zum oberen Kühlpunkt $T_G$ alle von unterschiedlichen thermischen Ausdehnungen herrührenden Spannungen vollständig relaxieren, bei tieferen Temperaturen aber gar nicht mehr und daß zweitens die Dicke der Oberflächenschicht klein ist gegen die Dicke des betrachteten Glasstücks, folgt aus dem Hookeschen Gesetz für zweidimensionale Spannungszustände für die Druckvorspannung an der Oberfläche:

$$\sigma_O = \frac{(T_G - T_{ambient}) \cdot \Delta CTE \cdot E}{1 - \mu} \qquad (3)$$

Dabei ist $\Delta CTE$ die Differenz zwischen den thermischen Ausdehnungskoeffizienten im Kern $CTE_K$ und an der Oberfläche $CTE_O$.
Unter "Oberfläche" wird erfindungsgemäß ein Anteil des Glases verstanden, der der Grenzfläche Glas/Luft nahe ist. Das Glas, das die Oberfläche bildet, wird hier "Oberflächenglas" genannt; das übrige Glas, das weiter im Inneren liegt, wird hier "Bulkglas" oder "Kernglas" genannt. Eine genaue Abgrenzung zwischen Oberfläche und Bulk ist schwierig, daher wird für diese Erfindung definiert, dass das Oberflächenglas bis zu einer Tiefe von < 20 nm vorliegt. Die Oberflächenanalyse der Zusammensetzung kann insbesondere per Cs-TOF-SIMS bei 1000eV erfolgen. Als Oberflächenwert wird jeweils der Mittelwert der oberflächennahen Messungen bis zu einer Tiefe < 20 nm herangezogen und die Zusammensetzung in konstituierenden Phasen mit Hilfe der inversen Matrix aus der Oxidzusammensetzung bestimmt.
Bevorzugt werden 3 oder mehr Einzelmessungen ab ca. 5nm Tiefe bis <20nm Tiefe durchgeführt. Die Einzelmessungen sind bevorzugt äquidistant. Beispielsweise können Einzelmessungen bei einer Tiefe von 6 nm, 9 nm, 12 nm, 15 nm und 18 nm oder Einzelmessungen bei einer Tiefe von 5 nm, 7,5 nm, 10 nm, 12,5 nm, 15 nm und 17,5 nm durchgeführt werden. Die genaue Tiefe der Einzelmessungen ist dabei nicht entscheidend. Auf der Basis der so ermittelten Zusammensetzung des Oberflächenglases werden die Eigenschaften des Oberflächenglases rechnerisch anhand der hierin erläuterten Formeln ermittelt.
Die Zusammensetzung des Kernglases kann mit einer herkömmlichen chemischen Analyse der Glaszusammensetzung ermittelt werden, da die Glaszusammensetzung in größerer Tiefe durch die Herstellung keine Veränderung erfährt. Kernglas liegt jedenfalls in 500 nm Tiefe vor. Die Oberfläche kann durch bestimmte Maßnahmen während der Glasherstellung zum Vorteil beeinflusst werden.
Bevorzugt werden die TOF-SIMS-Messwerte mit Hilfe der Werte aus der chemischen Analyse des Kernglases normiert. Insbesondere können die Ergebnisse der TOF-SIMS in Richtung Oberfläche fortgeschrieben werden (gleiche Signalstärke heißt gleicher Massenfluss). Man ordnet also bevorzugt einer bestimmten TOF-SIMS-Signalstärke des Kernglases (beispielsweise bestimmt in einer Tiefe von 500 nm, 600 nm oder 700 nm oder man mittelt) eine Konzentration in % zu und zwar genau die, die der Konzentration aus der chemischen Analyse des Glases entspricht. Diese Werte schreibt man zur Oberfläche hin fort, d.h. also, wenn sich eine Signalstärke von x ergeben hat, die einer Konzentration von 20% entspricht, und man an der Oberfläche auch x misst, setzt man die Oberflächenkonzentration zunächst auch gleich 20%. Wenn man an der Oberfläche statt des Wertes x den Wert 2x misst, setzt man die Oberflächenkonzentration gleich 40%. Anschließend werden die so ermittelten Oberflächenkonzentrationen so normiert, dass deren Summe 100% beträgt.
Die Aufgabe wird durch eine gezielte Kombination eines Herstellungsverfahrens und geeigneter Gläser gelöst.

Kern des Herstellungsverfahrens ist eine Veränderung der Oberflächenzusammensetzung gegenüber der Kernzusammensetzung durch gezielten Abtrag einzelner Komponenten. Dadurch werden Glasartikel erhalten, die ein Oberflächenglas mit im Vergleich zum Kernglas veränderter Zusammensetzung umfassen, so dass sich der thermische Ausdehnungskoeffizient an der Oberfläche und im Kern unterscheidet.

Die geeigneten Gläser wiederum werden ihrerseits im folgenden als Kombination von stöchiometrischen Gläsern beschrieben, also Gläsern, die in derselben Stöchiometrie auch als Kristalle existieren und deren Eigenschaft wegen der- wie in der Literatur an vielen Beispielen durch NMR-Messungen o.ä. überprüft - identischen Topologie der Baugruppen jeweils für Glas und Kristall als sehr ähnlich angenommen werden können. Hierfür werden solche stöchiometrischen Gläser ausgewählt, deren Mischung ein Verhalten im Sinne einer Lösung der erfindungsgemäßen Aufgabe erzielbar macht. In dieser Anmeldung werden diese stöchiometrischen Gläser auch als "Grundgläser" bzw. "konstituierende Phasen" bezeichnet.

Es ist kein neues Konzept, Gläser anhand der ihnen zuzuordnenden konstituierenden Phasen zu beschreiben. Durch die Angabe der Grundgläser lassen sich Rückschlüsse auf die chemische Struktur eines Glases ziehen (vgl. Conradt R: "Chemical structure, medium range order, and crystalline reference state of multicomponent oxide liquids and glasses", in Journal of Non-Crystalline Solids, Volumes 345-346, 15 October 2004, Pages 16-23).

Ein Grundgedanke dieses Konzeptes ist, dass man die Kombination von verschiedenen Grundgläsern zu einem Glas in guter Näherung, wie Conradt, loc. cit., ausführt, wie eine ideale Mischung beschreiben und daher annehmen kann, dass sich die Eigenschaften der Mischung als lineare Superposition der Eigenschaften der Grundgläser beschreiben können. Das ist bei der Beschreibung durch einfache Oxide nicht der Fall; zwischen diesen finden beim Zusammenmischen noch vielfältige Reaktionen statt, z.B. die Säure-Base-Reaktion, wenn Komponenten wie $Na_2O$ (Anhydrid der Natronlauge) und $SiO_2$ (Anhydrid der Kieselsäure) zusammentreffen. Eine Mischung aus einfachen Oxiden kann also keineswegs als in guter Näherung ideal betrachtet werden. Bei einer Mischung von "fertigen" Grundgläsern, bei denen insbesondere die Säure-Base-Reaktion schon stattgefunden hat, ist das hingegen der Fall.

Die vorliegende Erfindung betrifft einen Glasartikel, insbesondere einen Borosilikatglasartikel, umfassend drei (ineinander übergehende) Abschnitte:

- ein Oberseiten-Oberflächenglas,

- ein Kernglas, und

- ein Unterseiten-Oberflächenglas,

  • wobei das Oberseiten-Oberflächenglas und das Unterseiten-Oberflächenglas jeweils bis zu einer Tiefe von < 20 nm vorliegen und das Kernglas jedenfalls in 500 nm Tiefe vorliegt,

  • wobei die Summe der Anteile von Zinn-Oxid und Bismut-Oxid im Unterseiten-Oberflächenglas größer ist als die Summe der Anteile von Zinn-Oxid und Bismut-Oxid im Oberseiten-Oberflächenglas,

  • wobei das Kernglas einen nach den Formeln (13, 14) berechneten $CTE_K$ in einem Bereich von 2,5 bis 5,0 ppm/K aufweist,

  • wobei das Oberseiten-Oberflächenglas einen nach den Formeln (14, 15, 16) berechneten $CTE_O$ aufweist, der im Vergleich zu dem nach den Formeln (13, 14) berechneten $CTE_K$ des Kernglases um mindestens 0,6 ppm/K geringer ist, und

  • wobei sich nach Formel (10) eine Druckvorspannung $\sigma_O$ an der Oberseiten-Oberfläche von mindestens 50 MPa ergibt, wenn für $E/(1-\mu)$ und $T_G$ die nach den Formeln (31), (29) und (37) berechneten Werte des Kernglases und für $\Delta CTE$ die Differenz $CTE_K$-$CTE_O$ der für Kernglas und Oberseiten-Oberflächenglas berechneten CTE-Werte eingesetzt werden.

Der erfindungsgemäße Glasartikel umfasst drei (ineinander übergehende) Abschnitte, nämlich ein Oberseiten-Oberflächenglas, ein Kernglas und ein Unterseiten-Oberflächenglas. Die drei Abschnitte sind integraler Bestandteil des einen Glasartikels. Mit der Unterteilung in drei Abschnitte soll nicht zum Ausdruck gebracht werden, dass der Glasartikel ein Laminat oder einen vergleichbaren Schichtverbund darstellt, bei dem drei verschiedene Glasartikel zu einem neuen Glasartikel zusammenlaminiert oder anderweitig formschlüssig miteinander verbunden sind. Um ein derartiges Laminat oder dergleichen handelt es sich bei dem erfindungsgemäßen Glasartikel nicht, obgleich der Glasartikel natürlich als Teil eines Laminats verwendet werden kann. Die Unterscheidung von drei Abschnitten innerhalb des einen Glasartikels ist vielmehr dem Umstand geschuldet, dass sich insbesondere im Hinblick auf das Herstellungsverfahren des Glasartikels Veränderungen der Glaszusammensetzung an dessen Oberfläche herbeiführen lassen, mit deren Hilfe vorteilhafte technische Effekte erzielt werden können, insbesondere eine gewünschte Druckvorspannung an der Oberseiten-Oberfläche.

Der Glasartikel kann beispielsweise ein Flachglas sein, insbesondere eine Glasscheibe. Die Abmessungen des Glasartikels können insbesondere als Länge, Breite und Dicke beschrieben werden. Ein Flachglas ist insbesondere ein Glasartikel, dessen Breite und Länge wesentlich größer sind als dessen Dicke.

Die Dicke des erfindungsgemäßen Glasartikels kann beispielsweise in einem Bereich von 0,1 bis 30 mm liegen, insbesondere von 0,2 bis 25 mm, von 0,5 bis 20 mm, von 1,0 bis 15 mm, von 1,5 bis 12 mm, von 2,0 bis 10 mm, von 3,0 bis 9,0 mm, oder von 4,0 bis 8,0 mm. Die Dicke des Glasartikels kann beispielsweise mindestens 0,1 mm, mindestens 0,2 mm, mindestens 0,5 mm, mindestens 1,0 mm, mindestens 1,5 mm, mindestens 2,0 mm, mindestens 3,0 mm, oder mindestens 4,0 mm betragen. Die Dicke des Glasartikels kann beispielsweise höchstens 30 mm, höchstens 25 mm, höchstens 20 mm, höchstens 15 mm, höchstens 12 mm, höchstens 10 mm, höchstens 9,0 mm, oder höchstens 8,0 mm betragen.

Die Breite des Glasartikels kann beispielsweise in einem Bereich von 1 bis 1000 cm liegen, insbesondere in einem Bereich von 2 bis 500 cm, von 5 bis 200 cm, von 10 bis 150 cm, von 20 bis 100 cm, oder von 40 bis 60 cm. Die Breite des Glasartikels kann beispielsweise mindestens 1 cm, mindestens 2 cm, mindestens 5 cm, mindestens 10 cm, mindestens 20 cm, oder mindestens 40 cm betragen. Die Breite des Glasartikels kann beispielsweise höchstens 1000 cm, höchstens 500 cm, höchstens 200 cm, höchstens 150 cm, höchstens 100 cm, oder höchstens 60 cm betragen.

Die Länge des Glasartikels kann beispielsweise in einem Bereich von 1 bis 1000 cm liegen, insbesondere in einem Bereich von 2 bis 500 cm, von 5 bis 200 cm, von 10 bis 150 cm, von 20 bis 100 cm, oder von 50 bis 70 cm. Die Länge des Glasartikels kann beispielsweise mindestens 1 cm, mindestens 2 cm, mindestens 5 cm, mindestens 10 cm, mindestens 20 cm, oder mindestens 50 cm betragen. Die Länge des Glasartikels kann beispielsweise höchstens 1000 cm, höchstens 500 cm, höchstens 200 cm, höchstens 150 cm, höchstens 100 cm, oder höchstens 70 cm betragen.

Bevorzugt ergibt sich nach Formel (10) eine Druckvorspannung $\sigma_O$ an der Oberseiten-Oberfläche von mindestens 50 MPa, mindestens 60 MPa, mindestens 70 MPa, mindestens 80 MPa, mindestens 90 MPa, mindestens 100 MPa, mindestens 105 MPa, oder mindestens 110 MPa, wenn für $E/(1-\mu)$ und $T_G$ die nach den Formeln (31), (29) und (37) berechneten Werte des Kernglases und für $\Delta CTE$ die Differenz $CTE_K - CTE_O$ der für Kernglas und Oberseiten-Oberflächenglas berechneten CTE-Werte eingesetzt werden. In einigen Ausführungsformen ergibt sich nach Formel (10) eine Druckvorspannung $\sigma_O$ an der Oberseiten-Oberfläche von höchstens 250 MPa, höchstens 225 MPa, höchstens 200 MPa, höchstens 175 MPa, höchstens 150 MPa, höchstens 140 MPa, höchstens 130 MPa, oder höchstens 120 MPa, wenn für $E/(1-\mu)$ und $T_G$ die nach den Formeln (31), (29) und (37) berechneten Werte des Kernglases und für $\Delta CTE$ die Differenz $CTE_K - CTE_O$ der für Kernglas und Oberseiten-Oberflächenglas berechneten CTE-Werte eingesetzt werden. In einigen Ausführungsformen ergibt sich nach Formel (10) eine Druckvorspannung $\sigma_O$ an der Oberseiten-Oberfläche von 50 bis 250 MPa, von 60 bis 225 MPa, von 70 bis 200 MPa, von 80 bis 175 MPa, von 90 bis 150 MPa, von 100 bis 140 MPa, von 105 bis 130 MPa, oder von 110 bis 120 MPa, wenn für $E/(1-\mu)$ und $T_G$ die nach den Formeln (31), (29) und (37) berechneten Werte des Kernglases und für $\Delta CTE$ die Differenz $CTE_K - CTE_O$ der für Kernglas und Oberseiten-Oberflächenglas berechneten CTE-Werte eingesetzt werden.

Die Ausdrücke "Oberseite" und "Unterseite" sollen nicht zum Ausdruck bringen, dass die Oberseite bei der Verwendung des Glasartikels zwangsläufig räumlich gesehen oben und die Unterseite entsprechend unten angeordnet ist. Vielmehr dienen die Begriffe lediglich der eindeutigen Unterscheidung der beiden Seiten des Glasartikels und der entsprechenden Oberflächengläser. Anstelle von "Oberseite" und "Unterseite" können erfindungsgemäß beispielsweise auch die Begriffe "erste Seite" und "zweite Seite" verwendet werden. In Ausführungsformen, in denen der Glasartikel im Floatverfahren hergestellt wird, weisen die Begriffe "Oberseite" und "Unterseite" auf die Orientierung während des Floatens hin. Die Unterseite ist dem Floatbad zugewandt und die Oberseite ist vom Floatbad abgewandt. Der Begriff "Kernglas" verweist demgegenüber auf die Zusammensetzung des Kerns des Glasartikels, dessen Zusammensetzung im Gegensatz zur Zusammensetzung des Oberseiten-Oberflächenglases und des Unterseiten-Oberflächenglases nicht durch das Herstellungsverfahren verändert wurde.

Bevorzugt weist das Kernglas eine Zusammensetzung auf, die durch ein System konstituierender Phasen gekennzeichnet ist, das die konstituierende Phase Reedmergnerit in einem Anteil von 10 bis 50 Mol%, die konstituierende Phase Kalium-Reedmergnerit in einem Anteil von 0 bis 30 Mol%, die konstituierende Phase Anorthit in einem Anteil von 0 bis 15 Mol%, die konstituierende Phase Dibortrioxid in einem Anteil von 0 bis 20 Mol%, und die konstituierende Phase Siliziumdioxid in einem Anteil von 20 bis 75 Mol% umfasst.

Kernglas, das durch ein System konstituierender Phasen gekennzeichnet ist, das die konstituierende Phase Reedmergnerit in einem Anteil von 10 bis 50 Mol%, die konstituierende Phase Kalium-Reedmergnerit in einem Anteil von 0 bis 30 Mol%, die konstituierende Phase Anorthit in einem Anteil von 0 bis 20 Mol%, die konstituierende Phase Dibortrioxid in einem Anteil von 0 bis 20 Mol%, und die konstituierende Phase Siliziumdioxid in einem Anteil von 20 bis 75 Mol% umfasst, ist besonders gut geeignet, um die gewünschte Druckvorspannung über einen Unterschied zwischen dem $CTE_K$ des Kernglases und dem $CTE_O$ des Oberseiten-Oberflächenglases zu erhalten.

Insbesondere eignet sich beispielsweise ein Kernglas mit einer Zusammensetzung, die durch die folgenden das Kernglas konstituierenden Phasen gekennzeichnet ist:

| konstituierende Phase | Min (Mol%) | Max (Mol%) |
|---|---|---|
| Reedmergnerit | 10 | 50 |
| Kalium-Reedmergnerit | 0 | 30 |
| Cordierit | 0 | 20 |
| Anorthit | 0 | 20 |
| Diopsid | 0 | 20 |
| Dibortrioxid | 0 | 20 |
| Siliziumdioxid | 20 | 75 |

Ein Kernglas mit einer Zusammensetzung, die durch die folgenden das Kernglas konstituierenden Phasen gekennzeichnet ist, ist ebenfalls bevorzugt:

| konstituierende Phase | Min (Mol%) | Max (Mol%) |
|---|---|---|
| Reedmergnerit | 10 | 50 |
| Kalium-Reedmergnerit | 0 | 30 |
| Albit | 0 | 50 |
| Anorthit | 0 | 20 |
| Dibortrioxid | 0 | 20 |
| Siliziumdioxid | 20 | 75 |

Ferner sollen die erfindungsgemäßen Gläser bevorzugt weitere Bedingungen erfüllen, die mit der Zusammensetzung aus konstituierenden Phasen in formelmäßigen Zusammenhängen stehen, die weiter unten aufgezeigt werden.
Wir geben zunächst Umrechnungsmatrizen für die Umrechnung der Zusammensetzungsangaben von konstituierenden Phasen in einfache Oxide an.

**Umrechnung von der Zusammensetzung aus konstituierenden Phasen in Zusammensetzung aus einfachen Oxiden und umgekehrt**

Die Zusammensetzung in konstituierenden Phasen eines der besonders bevorzugten Gläser wird zum Zweck der Umrechnung in der folgenden normierten Form angegeben:

**Tabelle 1**

| konstituierende Phase | Formel (auf ein einfaches Oxid normiert) |
|---|---|
| Reedmergnerit | $(Na_2O \cdot B_2O_3 \cdot 6SiO_2)/8$ |
| Kalium-Reedmergnerit | $(K_2O \cdot B_2O_3 \cdot 6SiO_2)/8$ |
| Cordierit | $(2MgO \cdot 2Al_2O_3 \cdot 5SiO_2)/9$ |
| Anorthit | $(CaO \cdot Al_2O_3 \cdot 2SiO_2)/4$ |
| Diopsid | $(MgO \cdot CaO \cdot 2SiO_2)/4$ |
| Dibortrioxid | $B_2O_3$ |
| Siliziumdioxid | $SiO_2$ |

Die Umrechnung dieser Zusammensetzungen in eine Zusammensetzungsangabe in Mol-% bezüglich der folgenden einfachen Oxide ...

| # | Oxid |
|---|------|
| 1. | $SiO_2$ |
| 2. | $B_2O_3$ |
| 3. | $Al_2O_3$ |
| 4. | MgO |
| 5. | CaO |
| 6. | $Na_2O$ |
| 7. | $K_2O$ |

... erfolgt mit Hilfe der hier angegebenen Matrix. Dabei wird die Zusammensetzungsangabe in Mol-% hinsichtlich der Grundgläser als Spaltenvektor von rechts an die Matrix multipliziert:

Matrix

| 6/8 | 6/8 | 5/9 | 2/4 | 2/4 | 0 | 1 |
|-----|-----|-----|-----|-----|---|---|
| 1/8 | 1/8 | 0 | 0 | 0 | 1 | 0 |
| 0 | 0 | 2/9 | 1/4 | 0 | 0 | 0 |
| 0 | 0 | 2/9 | 0 | 1/4 | 0 | 0 |
| 0 | 0 | 0 | 1/4 | 1/4 | 0 | 0 |
| 1/8 | 0 | 0 | 0 | 0 | 0 | 0 |
| 0 | 1/8 | 0 | 0 | 0 | 0 | 0 |

| | |
|---|---|
| | $(Na_2O \cdot B_2O_3 \cdot 6SiO_2)/8$ |
| | $(K_2O \cdot B_2O_3 \cdot 6SiO_2)/8$ |
| | $(2MgO \cdot 2Al_2O_3 \cdot 5SiO_2)/9$ |
| x | $(CaO \cdot Al_2O_3 \cdot 2SiO_2)/4$ |
| | $(MgO \cdot CaO \cdot 2SiO_2)/4$ |
| | $B_2O_3$ |
| | $SiO_2$ |

Als Ergebnis der Multiplikation des Spaltenvektors an die Matrix erhält man die Zusammensetzung des Glases in Molprozenten. Umgekehrt lässt sich eine Zusammensetzung in Molprozenten einfach über die jeweilige inverse Matrix in eine Grundglaszusammensetzung überführen. Dabei gelten natürlich nur solche Grundglaszusammensetzungen als erfindungsgemäß, die bei Umrechnung keine negativen Werte für die Grundgläser ergeben.

Die Zusammensetzung in konstituierenden Phasen eines weiteren besonders bevorzugten Glases wird zum Zweck der Umrechnung in der folgenden normierten Form angegeben:

**Tabelle 2**

| konstituierende Phase | Formel (auf ein einfaches Oxid normiert) |
|---|---|
| Reedmergnerit | $(Na_2O \cdot B_2O_3 \cdot 6SiO_2)/8$ |
| Kalium-Reedmergnerit | $(K_2O \cdot B_2O_3 \cdot 6SiO_2)/8$ |
| Albit | $(Na_2O \cdot Al_2O_3 \cdot 6SiO_2)/8$ |
| Anorthit | $(CaO \cdot Al_2O_3 \cdot 2SiO_2)/4$ |

(fortgesetzt)

| konstituierende Phase | Formel (auf ein einfaches Oxid normiert) |
|---|---|
| Dibortrioxid | $B_2O_3$ |
| Siliziumdioxid | $SiO_2$ |

Die Umrechnung dieser Zusammensetzungen in eine Zusammensetzungsangabe in Mol-% bezüglich der folgenden einfachen Oxide ...

| # | Oxid |
|---|---|
| 1. | $SiO_2$ |
| 2. | $B_2O_3$ |
| 3. | $Al_2O_3$ |
| 4. | CaO |
| 5. | $Na_2O$ |
| 6. | $K_2O$ |

... erfolgt mit Hilfe der hier angegebenen Matrix. Dabei wird die Zusammensetzungsangabe in Mol-% hinsichtlich der Grundgläser als Spaltenvektor von rechts an die Matrix multipliziert:

**Matrix**

| | | | | | |
|---|---|---|---|---|---|
| 6/8 | 6/8 | 6/8 | 2/4 | 0 | 1 |
| 1/8 | 1/8 | 0 | 0 | 1 | 0 |
| 0 | 0 | 1/8 | 1/4 | 0 | 0 |
| 0 | 0 | 0 | 1/4 | 0 | 0 |
| 1/8 | 0 | 1/8 | 0 | 0 | 0 |
| 0 | 1/8 | 0 | 0 | 0 | 0 |

$$x \begin{array}{|l|} \hline (Na_2O \cdot B_2O_3 \cdot 6SiO_2)/8 \\ \hline (K_2O \cdot B_2O_3 \cdot 6SiO_2)/8 \\ \hline (Na_2O \cdot Al_2O_3 \cdot 6SiO_2)/8 \\ \hline (CaO \cdot Al_2O_3 \cdot 2SiO_2)/4 \\ \hline B_2O_3 \\ \hline SiO_2 \\ \hline \end{array}$$

Als Ergebnis der Multiplikation des Spaltenvektors an die Matrix erhält man die Zusammensetzung des Glases in Molprozenten. Umgekehrt lässt sich eine Zusammensetzung in Molprozenten einfach über die jeweilige inverse Matrix in eine Grundglaszusammensetzung überführen. Dabei gelten natürlich nur solche Grundglaszusammensetzungen als erfindungsgemäß, die bei Umrechnung keine negativen Werte für die Grundgläser ergeben.

Im folgenden werden die weiteren Bedingungen dargelegt, die die erfindungsgemäßen Gläser erfüllen sollen und die z.T. mit der Zusammensetzung aus konstituierenden Phasen in formelmäßigen Zusammenhängen stehen, insbesondere bestimmte Oberflächeneigenschaften.

Um diese Oberflächeneigenschaften genau beschreiben zu können, muß zunächst die Herleitung der Gleichungen (3) einschließlich der dabei gemachten Annahmen referiert werden.

Bei der Herleitung von (3) wird zunächst davon ausgegangen, daß während eines Kühlvorganges bis zum oberen Kühlpunkt alle Spannungen instantan relaxieren und ab dem oberen Kühlpunkt gar nicht mehr relaxieren, entsprechend der Näherung von Franz Simon, Über den Zustand der unterkühlten Flüssigkeiten und Gläser, Zeitschrift für anorganische und allgemeine Chemie 203, Nr. 1 (1931), S. 219-227. Aus dem Unterschied zwischen dem Ausdehnungskoeffizienten an der Oberfläche und im Kern resultiert dann bei Raumtemperatur, hier als $T_{ambient}$ bezeichnet, eine relative Verzerrung $(T_G - T_{ambient}) \cdot \Delta CTE$ des Oberflächen- und des Kernmaterials. Als Raumtemperatur $T_{ambient}$ wird eine Temperatur von 25°C angenommen. Im Gleichgewicht herrscht in der Oberfläche eine Druckvorspannung $\sigma_O$ und im Kern eine Zugvorspannung $\sigma_K$, die wegen der Gleichgewichtsbedingung

$$0 = \int_0^a \sigma(z)dz \qquad (4)$$

dem Zusammenhang

$$0 = \sigma_O \cdot d_O + \sigma_K \cdot \left(\frac{a}{2} - d_O\right) \qquad (5)$$

genügen müssen. Dabei geht das Integral in (4) in Normalenrichtung über die Scheibendicke a, $d_O$ ist die Dicke der Oberflächenschicht.

Im Falle eines ebenen Spannungszustandes gilt für den Zusammenhang zwischen Verzerrung $\varepsilon$ und Spannung $\sigma$:

$$\sigma = -\varepsilon \cdot \frac{E}{1-\mu} \qquad (6)$$

so daß gilt:

$$0 = \varepsilon_O \cdot d_O + \varepsilon_K \cdot \left(\frac{a}{2} - d_O\right) \qquad (7)$$

wobei $\varepsilon_O$ die Verzerrung an der Oberfläche und $\varepsilon_K$ die Verzerrung im Kern ist.

Wie oben gesagt, gilt für die relative Verzerrung von Oberfläche und Kern, also $\varepsilon_O - \varepsilon_K$, die Beziehung:

$$\varepsilon_O - \varepsilon_K = -(T_G - T_{ambient}) \cdot \Delta CTE \qquad (8)$$

Wenn wir jetzt noch davon ausgehen, daß die Oberflächenschicht mit verändertem CTE sehr viel dünner ist als der Kern des Glases, können wir $\varepsilon_K$ vernachlässigen und schreiben:

$$\varepsilon_O \approx -(T_G - T_{ambient}) \cdot \Delta CTE \qquad (9)$$

bzw.

$$\sigma_O = \frac{E}{1-\mu} \cdot (T_G - T_{ambient}) \cdot \Delta CTE \qquad (10)$$

Ab dieser Vernachlässigung ist es nicht relevant, ob die Vorspannung bezüglich der Mittelebene des Glasartikels symmetrisch ist oder ein asymmetrisches Spannungsprofil vorliegt.

Beim Übergang von (9) auf (10) wird näherungsweise angenommen, daß der Elastizitätsmodul E und die Poissonzahl $\mu$ nur in einem schwachen und hier vernachlässigbaren Maße von der Zusammensetzung abhängen, wohingegen der CTE stark von der Zusammensetzung abhängt. Diese Annahme steht in Übereinstimmung mit den Eigenschaften üblicher technischer Gläser, siehe Schott, Technical Glasses, Physical and Technical Properties, Mainz, 2014, https://www.us.schott.com/d/epackaging/0ad24277-2ace-4d9a-999d-736ed389f6cc/1.3/18.11.15_final_schott_technical_glasses_us.pdf.

Die Gleichung (10) und alle daran anschließenden Betrachtungen gelten per constructionem auch für den Fall, daß sich das beschriebene Phänomen auf eine Seite des Glasartikels beschränkt.

Die Gleichung (10) läßt sich sofort verallgemeinern auf den Fall, daß der CTE in Oberflächennähe einen von der Tiefe z abhängenden Verlauf nimmt. Voraussetzung ist nur, daß die Dicke der Oberflächenschicht, in der der CTE vom Wert im Kernbereich verschieden ist, klein gegen die Gesamtdicke der Scheibe ist. Man erhält dann:

$$\sigma(z) = \frac{E}{1-\mu} \cdot (T_G - T_{ambient}) \cdot \left(CTE_K - CTE(z)\right) \qquad (11)$$

Erfindungsgemäß sind Glasartikel, insbesondere Scheiben, bei denen sich in Oberflächennähe durch eine Variation des CTE mit der Tiefe z entweder ein stufenförmiger oder ein kontinuierlicher Spannungsverlauf ausbildet, mit einer Zugspannungszone im Kern des Glasproduktes und einer Druckspannungs(verlaufs)zone an der Oberfläche.

Setzt man in (10) die für technische Gläser typischen Werte E = 72 GPa, $\mu$ = 0.2, $T_G$ = 575°C ein und setzt $T_{ambient}$ = 25°C, so erhält man:

$$\sigma_O = 49500\, GPa \cdot K \cdot \Delta CTE \qquad (12)$$

Damit führt ein $\Delta$CTE von 0.5ppm/K zu $\sigma_O \approx$ 25 MPa, ein $\Delta$CTE von 1ppm/K zu $\sigma_O \approx$ 50 MPa usw.

Dieser Wert, also 50MPa, liegt in der Größenordnung dessen, was man als Druckvorspannung direkt an der Oberfläche eines sogenannten teilvorgespannten Glases (d.h. eines Glases mit einer Druckvorspannung von 40 bis 60 MPa) mißt (siehe B. Weller, S. Tasche, Glasbau; in: Wendehorst Bautechnische Zahlentafeln, Hrsg.: O.W. Wetzell, 32. Auflage, 2007; zitiert nach K.-Ch. Thienel, Scriptum zur Vorlesung "Werkstoffe des Bauwesens / Glas", Institut für Werkstoffe des Bauwesens, Fakultät für Bauingenieur- und Vermessungswesen, Universität der Bundeswehr München, Frühjahrstrimester 2018, www.unibw.de > lehre > skripte-werkstoffe > glas-2018.pdf).

Druckvorspannungswerte dieser Größenordnung sind Ziel der vorliegenden Erfindung. Druckvorspannungen erhöhen die Festigkeit, u.a. durch das Zusammendrücken von Rissen, deren Tiefe in der Größenordnung der Dicke der Druckspannungszone liegt. Mit einer Druckvorspannungszone einer Dicke im zweistelligen Nanometerbereich lassen sich beispielsweise die für frisch gezogenes Glas typischen Risse der Tiefe 1nm bis 10nm zusammendrücken, mit einer Druckvorspannungszone einer Dicke im dreistelligen Nanometerbereich die für frisch gezogenes und dann (z.B. zur Spannungsrelaxation) wärmebehandeltes Glas typischen Risse der Tiefe 100nm, siehe R.E. Mould, The Strength of Inorganic Glasses, in: Fundamental Phenomena in the Materials Sciences, Herausgeber L.J. Bonis, J.J. Duga und J.J. Gilman, 119-149 (1967), zitiert nach Hong Li, Strength of Glass and Glass Fiber, Invited presentation, 76th Conference on Glass Problems, GMIC, Alfred University, Am. Ceram. Soc. (Columbus, OH, Nov 2-5, 2015), https://www.researchgate.net/publication/303099608_Strength_of_Glass_and_Glass_Fibers.

Risse der genannten Größenordnungen sind insbesondere dann nicht zu vernachlässigen, wenn es gelingt, die Handhabung von erfindungsgemäßen Bauteilen wie insbesondere Scheiben so durchzuführen, daß es dabei zu keinen (im wörtlichen Sinne) tiefergehenden Verletzungen des Glases kommt.

Erfindungsgemäß sind demgemäß Glasartikel, insbesondere mit der beschriebenen Zusammensetzung im Kern, für die die Differenz $CTE_K$ - $CTE_O$ mindestens 0.6ppm/K beträgt, bevorzugt mindestens 0.8ppm/K, besonders bevorzugt mindestens 1ppm/K, ganz besonders bevorzugt mindestens 1.2ppm/K, noch weiter bevorzugt mindestens 1.4ppm/K, am meisten bevorzugt mindestens 1.6ppm/K.

Diese Differenz wird bestimmt von den Zusammensetzungen in den Bereichen von Kern und Oberfläche, aus denen die jeweiligen Ausdehnungskoeffizienten folgen, sowie der Kombination aus Zusammensetzung und Herstellungsverfahren, aus der wiederum der Unterschied der Zusammensetzungen von Kern und Oberfläche resultiert.

Da sich der thermische Ausdehnungskoeffizient in sehr guter Näherung über die mittlere Bindungsstärke aus der Zusammensetzung berechnen läßt, werden hier die so berechneten Werte verwendet. $CTE_K$ und $CTE_O$ werden aus der Zusammensetzung im Kernglas bzw.

Oberflächenglas gemäß Formeln (13, 14, 15, 16) berechnet. Für die Berechnung des $CTE_K$ werden die Formeln (13, 14) verwendet. Der $CTE_O$ kann mit den Formeln (13, 14) oder mit den Formeln (14, 15, 16) berechnet werden, wird jedoch bevorzugt mit den Formeln (14, 15, 16) berechnet. Der Grund dafür ist, dass sich im Hinblick auf das Herstellungsverfahren eine derartige Veränderung der Zusammensetzung des Oberflächenglases ergeben kann, dass dessen Zusammensetzung sich nicht mehr mit einem erfindungsgemäßen Phasensystem beschreiben lässt, insbesondere wenn sich für eine oder mehrere Phasen negative Phasenanteile ergeben sollten, so dass die phasenunabhängigen Formeln (14, 15, 16) für die Berechnung des $CTE_O$ besser geeignet sind.

Für den Quotienten aus dem elastischen Modul und der Größe (1-$\mu$) sind in dem obigen Rechenbeispiel typische Werte verwendet worden.

Erfindungsgemäß bevorzugt sind Glasartikel, insbesondere mit der beschriebenen Zusammensetzung im Kern, für die der Quotient aus dem elastischen Modul und der Größe $(1-\mu)$ mindestens 80 GPa beträgt.

Da sich auch der elastische Modul in sehr guter Näherung über die mittlere Bindungsstärke aus der Zusammensetzung berechnen läßt und sich die Poissonzahl ebenfalls in sehr guter Näherung aus der Packungsdichte und den Vernetzungszahlen berechnen läßt, werden im folgenden die auf diese Weise berechneten Werte verwendet (Formeln (29) und (27)).

Bevorzugt liegt der mit Hilfe der Formeln (31) und (29) aus der Zusammensetzung des Kernglases berechnete Quotient aus dem elastischen Modul und der Größe $(1-\mu)$ in einem Bereich von 80 GPa bis 100 GPa, insbesondere von 85 GPa bis 95 GPa. Der mit Hilfe der Formeln (31) und (29) aus der Zusammensetzung des Kernglases berechnete Quotient aus dem elastischen Modul und der Größe $(1-\mu)$ beträgt beispielsweise mindestens 80 GPa oder mindestens 85 GPa. Der mit Hilfe der Formeln (31) und (29) aus der Zusammensetzung des Kernglases berechnete Quotient aus dem elastischen Modul und der Größe $(1-\mu)$ beträgt bevorzugt höchstens 100 GPa, insbesondere höchstens 95 GPa.

Erfindungsgemäß bevorzugt sind ferner Glasartikel, insbesondere mit der beschriebenen Zusammensetzung im Kern, für die der $T_G$ mindestens 570°C beträgt.

Da sich auch der obere Kühlpunkt $T_G$ in sehr guter Näherung über die mittlere Bindungsstärke und die Zahl der Winkelfreiheitsgrade pro Atom aus der Zusammensetzung berechnen läßt, werden hier die so berechneten Werte verwendet (Formeln (35) und (33)).

Bevorzugt liegt der mit Hilfe der Formel (37) aus der Zusammensetzung des Kernglases berechnete $T_G$ in einem Bereich von 570°C bis 630°C, insbesondere von 580°C bis 620°C. Der mit Hilfe der Formel (37) aus der Zusammensetzung des Kernglases berechnete $T_G$ beträgt beispielsweise mindestens 570°C oder mindestens 580°C. Der mit Hilfe der Formel (37) aus der Zusammensetzung des Kernglases berechnete $T_G$ beträgt beispielsweise höchstens 630°C oder höchstens 620°C.

Bevorzugt liegt der nach Formel (35) aus der Zusammensetzung des Kernglases in konstituierenden Phasen berechnete Verarbeitungspunkt $VA_K$ in einem Bereich von 1200°C bis 1350°C, bevorzugt von 1250°C bis 1300°C. Bevorzugt beträgt der nach Formel (35) aus der Zusammensetzung des Kernglases in konstituierenden Phasen berechnete Verarbeitungspunkt $VA_K$ mindestens 1200°C oder mindestens 1250°C. Bevorzugt beträgt der nach Formel (35) aus der Zusammensetzung des Kernglases in konstituierenden Phasen berechnete Verarbeitungspunkt $VA_K$ höchstens 1350°C oder höchstens 1300°C.

Bevorzugt liegt die nach Formel (10) berechnete Druckvorspannung an der Oberfläche $\sigma_O$ für gefloatete Gläser mit einer atmosphärenseitigen Oberseite und einer zinnbadseitigen Unterseite auf der Oberseite bei mindestens 50 MPa und auf der Unterseite bei mindestens 25 MPa. Bevorzugt liegt die nach Formel (10) berechnete Druckvorspannung an der Oberfläche $\sigma_O$ insbesondere für gefloatete Gläser mit einer atmosphärenseitigen Oberseite und einer zinnbadseitigen Unterseite auf der Oberseite bei mindestens 60 MPa, mindestens 70 MPa, mindestens 80 MPa, mindestens 90 MPa, mindestens 100 MPa, mindestens 105 MPa, oder mindestens 110 MPa, wenn für $E/(1-\mu)$ und $T_G$ die nach den Formeln (31), (29) und (37) berechneten Werte des Kernglases und für $\Delta CTE$ die Differenz $CTE_K$-$CTE_O$ der für Kernglas und Oberseiten-Oberflächenglas berechneten CTE-Werte eingesetzt werden. In einigen Ausführungsformen liegt die nach Formel (10) berechnete Druckvorspannung an der Oberfläche $\sigma_o$ insbesondere für gefloatete Gläser mit einer atmosphärenseitigen Oberseite und einer zinnbadseitigen Unterseite auf der Oberseite bei höchstens 250 MPa, höchstens 225 MPa, höchstens 200 MPa, höchstens 175 MPa, höchstens 150 MPa, höchstens 140 MPa, höchstens 130 MPa, oder höchstens 120 MPa, wenn für $E/(1-\mu)$ und $T_G$ die nach den Formeln (31), (29) und (37) berechneten Werte des Kernglases und für $\Delta CTE$ die Differenz $CTE_K$-$CTE_O$ der für Kernglas und Oberseiten-Oberflächenglas berechneten CTE-Werte eingesetzt werden. In einigen Ausführungsformen liegt die nach Formel (10) berechnete Druckvorspannung an der Oberfläche $\sigma_o$ insbesondere für gefloatete Gläser mit einer atmosphärenseitigen Oberseite und einer zinnbadseitigen Unterseite auf der Oberseite in einem Bereich von 50 bis 250 MPa, von 60 bis 225 MPa, von 70 bis 200 MPa, von 80 bis 175 MPa, von 90 bis 150 MPa, von 100 bis 140 MPa, von 105 bis 130 MPa, oder von 110 bis 120 MPa, wenn für $E/(1-\mu)$ und $T_G$ die nach den Formeln (31), (29) und (37) berechneten Werte des Kernglases und für $\Delta CTE$ die Differenz $CTE_K$-$CTE_O$ der für Kernglas und Oberseiten-Oberflächenglas berechneten CTE-Werte eingesetzt werden.

**Thermischer Ausdehnungskoeffizient unterhalb des Glasübergangsbereiches**

Aus der Literatur ist bekannt, dass der thermische Ausdehnungskoeffizient z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83.

In einem einfachen Bild oxidischer Gläser setzt man die Kationen in jeweils einen von den umgebenden Sauerstoffatomen gebildeten Potentialtopf und nimmt als dessen Tiefe die Summe der Bindungsstärken der verschiedenen Einfachbindungen zu den umgebenden Sauerstoffatomen an, konzentriert also die gesamte Wechselwirkungsenergie in Potentialtöpfe mit den Kationen im Zentrum und den Sauerstoffatomen in der Peripherie. Damit muss der umgekehrte Fall nicht mehr betrachtet werden; er wäre auch schwerer zu analysieren, da sich ein Sauerstoffatom zwischen mehreren verschiedenartigen Kationen befinden kann, was umgekehrt in rein oxidischen Gläsern nicht vorkommen kann. Diese Werte sind tabelliert, z.B. in DE 10 2014 119 594 A1:

**Tabelle 3**

| Kation | Potentialtopftiefe / (kJ/mol) |
|--------|-------------------------------|
| Si | 1864 |
| B | 1572.5 |
| Al | 1537 |
| Mg | 999 |
| Ca | 1063 |
| Na | 440.5 |
| K | 395 |

Aus der Zusammensetzung eines Glases aus den oben angegebenen konstituierenden Phasen, den in den jeweiligen Phasen enthaltenen Anzahlen verschiedener Kationen und der oben tabellierten Potentialtopftiefen pro Kation lässt sich eine mittlere Potentialtopftiefe errechnen:

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}} \tag{13}$$

Dabei ist m die Zahl der auftretenden Kationentypen, $E_{pot,j}$ die oben tabellierte Potentialtopftiefe für den j-ten Kationentyp und $z_{j,i}$ die Anzahl der Kationen des j-ten Typs in der i-ten konstituierenden Phase. Die Summen über j sind im Folgenden tabelliert:

**Tabelle 4 "z-Summen" und "z-$E_{pot}$-Summen"**

| konstituierende Phase | Formel (auf ein einfaches Oxid normiert) | $\sum_{j=1}^{m} z_{i,j}$ ("z-Summe") | $\sum_{j=1}^{m} z_{i,j} \cdot E_{pot,j}$ / (kJ/mol) ("z-$E_{pot}$-Summe") |
|---|---|---|---|
| Reedmergnerit | $(Na_2O \cdot B_2O_3 \cdot 6SiO_2)/8$ | 1.25 | 1901.25 |
| Kalium-Reedmergnerit | $(K_2O \cdot B_2O_3 \cdot 6SiO_2)/8$ | 1.25 | 1889.875 |
| Albit | $(Na_2O \cdot Al_2O_3 \cdot 6SiO_2)/8$ | 1.25 | 1881 |
| Cordierit | $(2MgO \cdot 2Al_2O_3 \cdot 5SiO_2)/9$ | 1.222 | 1940.666667 |
| Anorthit | $(CaO \cdot Al_2O_3 \cdot 2SiO_2)/4$ | 1.25 | 1966.25 |
| Diopsid | $(MgO \cdot CaO \cdot 2SiO_2)/4$ | 1 | 1447,5 |
| Boroxid | $B_2O_3$ | 2 | 3145 |
| Siliziumdioxid | $SiO_2$ | 1 | 1864.00 |

Diese mittlere Bindungsstärke hängt, wie z.B. auch bei Metallen, siehe H. Föll, loc. cit., umgekehrt proportional mit dem thermischen Ausdehnungskoeffizienten zusammen. Eine Auswertung einer Reihe silicatischer Gläser unterschiedlichen Typs (Kalk-Natron-Gläser, Borosilicatgläser, Aluminosilicatgläser) führt zu folgender Formel:

$$CTE_{Glas} = \left( \frac{50116.33042 \left( \frac{kJ}{Mol} \right)}{\overline{E_{pot}}} - 26.1724514 \right) ppm/K \tag{14}$$

Damit läßt sich der $CTE_{Glas}$ im Mittel auf 0,3ppm/K genau vorhersagen.

Da in diese Berechnung des $CTE_{Glas}$ nur die Eigenschaften der Oxide eingehen, kann man $CTE_{Glas}$ auch direkt aus der in einfachen Oxiden angegebenen Zusammensetzung berechnen. Dazu schreibt man (13) um:

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}} = \frac{\sum_{j=1}^{m} (\sum_{i=1}^{n} c_i \cdot z_{i,j}) \cdot E_{pot,j}}{\sum_{j=1}^{m} (\sum_{i=1}^{n} c_i \cdot z_{i,j})} \qquad (15)$$

und identifiziert $\Sigma c_i \cdot z_{i,j}$ mit dem Produkt aus der molaren Konzentration $k_j$ des das j-te Kation enthaltenden einfachen Oxides und der Anzahl $x_j$ der Kationen in diesem einfachen Oxid:

$$\sum_{i=1}^{n} c_i \cdot z_{i,j} = k_j \cdot x_j \qquad (16)$$

Da die Erreichbarkeit der gewünschten CTE-Differenz zwischen Kern und Oberfläche vom $CTE_K$ des Kerns abhängt, werden diesbezüglich bestimmte Werte bevorzugt. Der nach den Formeln (13, 14) berechnete $CTE_K$ des Kernglases beträgt bevorzugt 2,5 bis 5,0 ppm/K, weiter bevorzugt 3,0 bis 4,5 ppm/K. Der nach Formeln (13, 14) berechnete $CTE_K$ des Kernglases beträgt bevorzugt mindestens 2,5 ppm/K, weiter bevorzugt mindestens 3,0 ppm/K. Der nach Formeln (13, 14) berechnete $CTE_K$ beträgt bevorzugt höchstens 5,0 ppm/K, weiter bevorzugt höchstens 4,5 ppm/K.

Der nach den Formeln (14, 15, 16) berechnete $CTE_O$ des Oberseiten-Oberflächenglases beträgt bevorzugt 1,2 bis 3,0 ppm/K, weiter bevorzugt 1,5 bis 2,5 ppm/K. Der nach Formeln (14, 15, 16) berechnete $CTE_O$ des Oberseiten-Oberflächenglases beträgt bevorzugt mindestens 1,2 ppm/K, weiter bevorzugt mindestens 1,5 ppm/K. Der nach Formeln (14, 15, 16) berechnete $CTE_O$ beträgt bevorzugt höchstens 3,0 ppm/K, weiter bevorzugt höchstens 2,5 ppm/K.

Bevorzugt weist das Oberflächenglas einen nach Formeln (14, 15, 16) berechneten $CTE_O$ auf, der im Vergleich zu dem nach Formeln (13, 14) berechneten $CTE_K$ des Kernglases um mindestens 0,6 ppm/K, weiter bevorzugt mindestens 0,8 ppm/K, besonders bevorzugt mindestens 1,0 ppm/K, weiter bevorzugt mindestens 1,2 ppm/K, weiter bevorzugt mindestens 1,4 ppm/K, weiter bevorzugt mindestens 1,6 ppm/K, weiter bevorzugt mindestens 1,8 ppm/K, weiter bevorzugt mindestens 2,0 ppm/K geringer ist. $\Delta CTE = CTE_K - CTE_O$ liegt bevorzugt in einem Bereich von 0,6 ppm/K bis 3,6 ppm/K, beispielsweise 0,8 ppm/K bis 3,4 ppm/K, 1,0 ppm/K bis 3,2 ppm/K, 1,2 ppm/K bis 3,0 ppm/K, 1,4 ppm/K bis 2,8 ppm/K, 1,6 ppm/K bis 2,6 ppm/K, 1,8 bis 2,4 ppm/K, oder 2,0 bis 2,2 ppm/K. $\Delta CTE = CTE_K - CTE_O$ kann beispielsweise höchstens 3,6 ppm/K, höchstens 3,4 ppm/K, höchstens 3,2 ppm/K, höchstens 3,0 ppm/K, höchstens 2,8 ppm/K, höchstens 2,6 ppm/K, höchstens 2,4 ppm/K, oder höchstens 2,2 ppm/K betragen.

**Dichte, Molvolumen und Packungsdichte**

Für die Berechnung des E-Moduls sind die Kenntnis der Dichte, des Molvolumens und der Packungsdichte erforderlich.

Bemerkenswerterweise lässt sich die Dichte $\rho$ sehr einfach per Hebelregel aus den Molmassen $M_i$ und Dichten $\rho_i$ der konstituierenden Phasen berechnen:

$$\rho = \frac{\sum_{i=1}^{n} c_i \cdot M_i}{\sum_{i=1}^{n} c_i \cdot \frac{M_i}{\rho_i}} \qquad (17)$$

Der Zähler von (17) ist dabei die Molmasse, der Nenner das Molvolumen $V_{mol}$ des Glases. Damit läßt sich die Dichte für die hier adressierten Glassysteme im Mittel auf 1% genau vorhersagen.

Die Dichtewerte finden sich in O.V. Mazurin, M.V. Streltsina, T.P. Shvaiko-Shvaikovskaya, Handbook of Glass Data A-C, Elsevier, Amsterdam, 1983-1987.

Aus dem Molvolumen berechnen wir als Zwischengröße für weitere Rechnungen noch die Packungsdichte $\chi$ des Glases. Dazu berechnen wir für jede konstituierende Phase zunächst das (molare) Ionenvolumen. Darunter verstehen wir das Volumen, das die zu einem Mol der konstituierenden Phase (genau: ein Mol der auf ein einfaches Oxid normierten konstituierenden Phase) einnehmen, wenn man sie als kugelförmige Ionen mit dem von Robert Shannon so genannten "Crystal Radius" auffasst, siehe Robert D. Shannon, Revised Effective Ionic Radii and Systematic Studies of Interatomic Distances in Halides and Chalcogenides, Acta Cryst. A32 (1976), S. 751-767. Diese Radien unterscheiden sich je nach Koordinationszahl. Für die Kationen sind die dazu notwendigen Koordinationszahlen der unten bei der Diskussion der konstituierenden Phasen gelisteten mineralogischen Literatur entnommen worden; nach Conradt R., loc. cit., gehen wir davon aus, dass die Koordinationszahlen der Kationen im Glas gleich denen der entsprechenden Kristallphasen sind. Die Sauerstoffatome werden entsprechend der Wertigkeit den Kationen zugeordnet, sprich auf ein Natriumion entfällt ein halbes Sauerstoffion usw. Für das einzelne Sauerstoffion wird dann angenommen, daß es passend zu dieser Zuordnung koordiniert ist, d.h. ein einem Siliziumion zugeordnetes Sauerstoffion ist zweifach koordiniert usw.

Liegen für einzelne Koordinationszahlen keine expliziten Radiuswerte in der Tabelle von Robert D. Shannon, loc. cit., vor, wird inter- bzw. extrapoliert.

Die sich daraus ergebenden molaren Ionenvolumina sind zusammen mit den Molmassen und Dichtewerten im folgenden tabelliert.

**Tabelle 5 Molmassen, Dichten und molare Ionenvolumina der normierten konstituierenden Phasen**

| konstituieren de Phase | Formel (auf ein einfaches Oxid normiert) | $M_i$/g | $\rho_i$/ $(g/cm^3)$ | Ionenvolumen $V_{ion,i}$ / $cm^3$ |
|---|---|---|---|---|
| Reedmergnerit | $(Na_2O \cdot B_2O_3 \cdot 6SiO_2)/8$ | 61.513 | 2.445 | 10.18044415 |
| Kalium-Reedmergnerit | $(K_2O \cdot B_2O_3 \cdot 6SiO_2)/8$ | 65.540 | 2.417 | 12.17972854 |
| Albit | $(Na_2O \cdot Al_2O_3 \cdot 6SiO_2)/8$ | 65.555 | 2.368 | 10.2644898 |
| Cordierit | $(2MgO \cdot 2Al_2O_3 \cdot 5SiO_2)/9$ | 64.994 | 2.635 | 9.754984882 |
| Anorthit | $(CaO \cdot Al_2O_3 \cdot 2SiO_2)/4$ | 69.552 | 2.694 | 10.55580119 |
| Diopsid | $(MgO \cdot CaO \cdot 2SiO_2)/4$ | 54.137 | 2.847 | 8.797510051 |
| Boroxid | $B_2O_3$ | 69.619 | 1.82 | 13.4254877 |
| Siliziumdioxid | $SiO_2$ | 60.084 | 2.203 | 9.100438178 |

Die Packungsdichte ergibt sich damit zu:

$$\chi = \frac{\sum_{i=1}^{n} c_i \cdot V_{ion,i}}{\sum_{i=1}^{n} c_i \cdot \frac{M_i}{\rho_i}} \qquad (18)$$

**Elastizitätsmodul**

Ausgangspunkt für die Berechnung des Elastizitätsmoduls ist die Theorie von Makishima und Mackenzie, siehe "Direct calculation of Young's modulus of glass", "Calculation of bulk modulus, shear modulus and Poisson's ratio of glass", J. Non-Crystall. Sol., 1973 und 1975. Nach dieser Theorie läßt sich das Elastizitätsmodul darstellen durch:

$$E \propto \chi \cdot \sum_{i=1}^{n} e_{Diss.,i} \cdot c_i \qquad (19)$$

Dabei ist $e_{diss.,i}$ die Dissoziationsenergiedichte der i-ten Komponente (Dimension z.B. $kJ/cm^3$) und $c_i$ deren molarer Anteil. $\chi$ ist die Packungsdichte.

Für die weiteren Rechnungen schreiben wir das um in:

$$E \propto \chi \cdot \frac{1}{V_{mol}} \cdot \sum_{i=1}^{n} E_{Diss.,i} \cdot c_i \qquad (20)$$

Unter Dissoziationsenergie verstehen Makishima und Mackenzie dasselbe wie die o.a. Bindungsstärke. Letztere haben wir oben den Kationen zugeordnet, so dass wir, wenn wir uns bei den Komponenten auf einfache Oxide beziehen, die gemittelte molare Dissoziationsenergie mit der o.a. mittleren Potentialtopftiefe eines Kations, multipliziert mit der Zahl z der Kationen pro Mol, identifizieren können:

$$\sum_{i=1}^{n} E_{Diss.,i} \cdot c_i = \sum_{i=1}^{n} c_i \cdot z_i \cdot E_{pot,i} = \overline{E_{pot}} \cdot \sum_{i=1}^{n} c_i \cdot z_i = \overline{E_{pot}} \cdot z \qquad (21)$$

Damit ergibt sich:

$$E \propto \chi \cdot \frac{\overline{E_{pot}} \cdot z}{V_{mol}} \qquad (22)$$

Mit der o.a. Theorie erhält man sehr gute Ergebnisse für Gläser, in denen keine Boroxolringe vorkommen; die von Makishima und Mackenzie vorgenommene adhoc-Erweiterung für Borate ist unbefriedigend.

Eine neue Theorie von Plucinski und Zwanziger ("Topological constraints and the Makishima-Mackenzie model", J. Non-Crystall. Sol., 2015), ergänzt den Ausdruck Kennzeichen um einen topologischen Vorfaktor, ist aber in der publizierten Form nur für rein kovalent gebundene Gläser (Chalkogenide) geeignet.

Vorliegend wird daher ein modifizierter topologischer Vorfaktor definiert.

Wesen topologischer Betrachtungen ist, wie beispielsweise in DE 10 2014 119 594 A1 ausführlich dargelegt, die den Atomen durch die Bindung zu den Nachbaratomen auferlegten Zwangsbedingungen abzuzählen. Diese Zwangsbedingungen betreffen zum einen Teil den interatomaren Abstand ("Abstandsbedingungen"), zum anderen die Bindungswinkel ("Winkelbedingungen"). Hat ein Atom r Nachbarn (r = Koordinationszahl), so folgen aus den r Abstandsbedingungen zu diesen Nachbarn r/2 diesem Atom zuzuordnende Abstandsbedingungen, wenn man die Abstandsbedingungen gleich unter beiden Bindungspartnern verteilt. Aus den Bindungswinkeln zwischen diesen Nachbarn, mit dem betrachteten Atom an der Spitze des jeweiligen Winkels, folgen weitere 2r-3 Winkelbedingungen, die diesem Atom zuzuordnen sind.

In DE 10 2014 119 594 A1 ist ein Verfahren beschrieben, das bei der Berechnung der Abstands- und Winkelbedingungen eine Wichtung aller Bedingungen mit der Einzelbindungsstärke und noch einmal eine zusätzliche Wichtung der Winkelbedingungen (nur die von den Sauerstoff-Kation-Sauerstoff-Winkeln herrührenden; die zu den Kation-Sauerstoff-Kation-Winkeln gehörenden Bedingungen werden vernachlässigt) mit dem Kovalenzgrad der jeweiligen Bindung vorsieht. Dabei sind die Wichtungsfaktoren normiert, indem jeweils durch die Einzelbindungsstärke bzw. den Kovalenzgrad der Silizium-Sauerstoffbindung geteilt wird, so dass sich für Quarzglas eine Zahl von (gerundet) 1,333333333 (d.h. 4/3) Abstandsbedingungen und (gerundet) 1,666666667 (d.h. 5/3) Winkelbedingungen pro Atom ergibt. Das entspricht, wie in DE 10 2014 119 594 A1 dargelegt, der direkten Analyse der Topologie von Quarzglas, wenn man alle Abstands- und Winkelbedingungen einfach zählt und die Winkelbedingungen der Silizium-Sauerstoff-Silizium-Winkel vernachlässigt.

Damit hat Quarzglas eine Zahl von "3" Zwangsbedingungen pro Atom, was genau der Zahl der Freiheitsgrade pro Atom entspricht. Quarzglas sollte also keine (oder realiter: eine sehr geringe) Zahl von Konfigurationsfreiheitsgraden pro Atom haben, was dem geringen $c_p$-Sprung von Quarzglas beim differenzkalorimetrisch gemessenen Glasübergang entspricht, siehe R. Brüning, "On the glass transition in vitreous silica by differential thermal analysis measurements", Journal of Non-Crystalline Solids 330 (2003) 13-22.

Für andere oxidische Gläser ergeben sich im Allgemeinen niedrigere Werte für die Zahlen der Abstands- und Winkelbedingungen pro Atom als (gerundet) 1,333333333 (4/3) bzw. 1,666666667 (5/3). Bei den Winkelbedingungen kann man noch unterscheiden, ob die zugehörigen Winkelbedingungen sich auf Winkel beziehen, die alle in einer Ebene liegen (trigonale Koordination) oder nicht (tetraedrische oder höhere Koordination). Letztere werden hier als 3D-Winkelbedingungen bezeichnet.

Entsprechend werden "4/3 minus Abstandsbedingungenzahl" als Abstandsfreiheitsgradezahl, "5/3 minus Winkelbedingungszahl als Winkelfreiheitsgradezahl und "5/3 minus 3D-Winkelbedingungenzahl" als 3DWinkelfreiheitsgradezahl bezeichnet, jeweils pro Atom (kurz: "p.A.").

Weiterhin greift folgende Überlegung. Der Modellansatz von Makishima-Mackenzie summiert und mittelt über isotrope Wechselwirkungen. Im Bereich der Boroxolringe ist die Wechselwirkung aber nicht isotrop, sondern es ist in der Ebene der Boroxolringe ein "kraftloses" Gleiten möglich.

Um dem Rechnung zu tragen, wird berücksichtigt, daß der Elastizitätsmodul E aus einem Scher- und einem Kompressions-/Dilatationsanteil zusammengesetzt ist. Dies wird durch die folgenden Gleichungen ausgedrückt, siehe z.B. H. Föll, Skript zur Vorlesung "Einführung in die Materialwissenschaft I", Christian Albrechts-Universität Kiel, S. 79 - 83:

$$\frac{1}{E} = \frac{1}{3G} + \frac{1}{9K} \qquad (23a)$$

$$G = \frac{E}{2(1+\mu)} \qquad (23b)$$

$$K = \frac{E}{3(1-2\mu)} \qquad (23c)$$

$$K = G \frac{2(1+\mu)}{3(1-2\mu)} \qquad\qquad (23d)$$

Dabei ist G der Schermodul, K der Kompressionsmodul und $\mu$ die Poissonzahl. E kann nach (23) wahlweise aus einem der Größenpaare G und K, G und $\mu$ sowie K und $\mu$ berechnet werden.

Die Theorie von Makashima und Mackenzie wird jetzt dahingehend modifiziert, daß die o.a. Proportionalität zwischen Modul und Dissoziationsenergiedichte nicht für den Elastizitätsmodul E, sondern für den Schermodul G angesetzt wird:

$$G \propto \frac{\overline{E_{pot} \cdot z}}{V_{mol}} \qquad\qquad (24)$$

Für den Schermodul wird an dieser Stelle keine weitere Proportionalität zur Packungsdichte angesetzt; die wie bei Makashima und Mackenzie auch hier gegebene Beziehung zur Packungsdichte wird weiter unten eingeführt.

Daß das Vorhandensein der Boroxolringe wegen der o.a. Gleitebenen zu einer Verkleinerung des Schermoduls führt, wird durch einen Vorfaktor f berücksichtigt, der als Verhältnis zwischen Zahlen definiert ist. Die erste Zahl ist die um (2/3) der Differenz von 3D-Winkelfreiheitsgradezahl p.A. und Winkelfreiheitsgradezahl p.A. verminderte Winkelbedingungenzahl p.A. Die zweite Zahl ist die Winkelbedingungenzahl p.A. Wenn keine Boroxolringe vorliegen, ist dieser Vorfaktor Eins; wenn Boroxolringe vorliegen, ist dieser Vorfaktor kleiner als Eins.

$$G \propto f \cdot \frac{\overline{E_{pot} \cdot z}}{V_{mol}} \quad ,$$

$$f = \frac{Winkelbedingungenzahl\ p.A. - \left(\frac{2}{3}\right)(3D Winkelfreiheitsgradezahl\ p.A. - Winkelfreiheitsgradezahl\ p.A.)}{Winkelbedingungenzahl\ p.A.} \qquad (25)$$

Die Zahl (2/3) ergibt sich aus folgender Überlegung, betreffend eine Scherung. Es wird angenommen, dass die Boroxolringe so verteilt gelagert sind, dass (1/3) in der Ebene liegen, die vom Scherwinkel überstrichen wird, und (2/3) in den Ebenen senkrecht dazu. Nur die beiden letztgenannten tragen zu einer Senkung des Schermoduls bei. Dementsprechend werden auch nur (2/3) derjenigen Winkelfreiheitsgrade gezählt, die sich zusätzlich ergeben, wenn man nicht alle Winkelbedingungen, sondern nur die 3D-Winkelbedingungen zählt.

Im Gegensatz zum Schermodul ist beim Kompressionsmodul keine erhebliche Veränderung durch das Vorhandensein der Gleitebenen zu erwarten. Aus Konsistenzgründen hat das eine Konsequenz für die Poissonzahl $\mu$. Dazu wird (23d) betrachtet. Wenn G sich durch die Einführung von Gleitebenen ändert und K sich dabei wegen ansonsten unveränderter Verhältnisse nicht ändern soll, kann und muss das durch eine Änderung $\Delta\mu_f$ von $\mu$ kompensiert werden. Um diese Änderung in erster Näherung zu quantifizieren, wird K in erster Ordnung nach f und $\mu$ entwickelt; es wird dann noch gefordert, daß $\Delta K = 0$ gilt:

$$\Delta K = \frac{2(1+\mu)}{3(1-2\mu)} \frac{\partial G}{\partial f} \Delta f + G\left(\partial \frac{2(1+\mu)}{3(1-2\mu)} / \partial\mu\right)\Delta\mu = \frac{2(1+\mu)}{3(1-2\mu)} \frac{G}{f}\Delta f + G\left(\frac{2}{(1-2\mu)^2}\right)\Delta\mu_f \overset{!}{=} 0 \qquad (26)$$

Daraus folgt:

$$\Delta\mu_f = -\left[\frac{(1+\mu)(1-2\mu)}{3}\frac{1}{f}\right]\Delta f \qquad\qquad (27)$$

Da die erfindungsgemäßen Gläser silicatische Gläser sind, wird als Aufpunkt für die Entwicklung Quarzglas gewählt. Für Quarzglas gelten $\mu = 0,17$ und $f = 1$, dementsprechend werden diese Werte in den eckige-Klammern-Ausdruck eingesetzt. Dieser Ausdruck nimmt damit den Wert 0,2574 an. Um $\Delta\mu_f$ für ein anderes silicatisches Glas zu erhalten, wird -0,2574 mit $\Delta f = f - 1$ multipliziert; dabei ist f der sich aus (25) für dieses andere Glas ergebende Wert.

Es ist beim Wechsel von Quarzglas auf ein anderes silicatisches Glas bezüglich $\mu$ noch ein anderer Umstand zu berücksichtigen. Andere silicatische Gläser haben ähnliche, aber unterschiedliche Packungsdichten, und es gilt eine

positive Korrelation zwischen $\mu$ und der Packungsdichte, siehe Greaves, G., Greer, A., Lakes, R., Rouxel, T, Poisson's ratio and modern materials, Nature Mater 10, 823-837 (2011). Dies wird durch einen zweiten $\Delta\mu$-Term berücksichtigt, der $\Delta\mu_\chi$ genannt wird. Für die erfindungsgemäßen Gläser kann dieser als linear angenommen werden, so dass gilt:

$$\frac{\Delta\mu_\chi}{\mu} = \frac{\Delta\chi}{\chi} \qquad (28)$$

Als Aufpunkt wird wieder Quarzglas genommen, für das $\chi = 0.33367062$ gilt. $\Delta\chi$ wird dann aus dem nach (18) zu berechnenden Wert für $\chi$ und 0.33367062 gemäß $\Delta\chi = \chi - 0.33367062$ bestimmt. Im Nenner links wird $\mu = 0.17$ und im Nenner rechts $\chi = 0.33367062$ gesetzt. Damit berechnen wir $\mu$ für ein erfindungsgemäßes Glas nach:

$$\mu = 0.17 + \Delta\mu_f + \Delta\mu_\chi \qquad (29)$$

Der Ansatz für E lautet damit und mit (23b):

$$E = a \cdot 2 \cdot (1 + \mu) \cdot f \cdot \frac{\overline{E_{pot}} \cdot z}{V_{mol}} + b \qquad (30)$$

"a" und "b" sind einstellbare Parameter. Die Auswertung einer Reihe verschiedener silicatischer Gläser unterschiedlichen Typs (Kalk-Natron-Gläser, Borosilicatgläser, Aluminosilicatgläser) führt zu folgender Formel:

$$E = \left(0.683888667 \left(2 \cdot (1 + \mu) \cdot f \cdot \frac{\overline{E_{pot}} \cdot z}{V_{mol}}\right) - 39.4242404\right) GPa \qquad (31)$$

Dabei sind $\overline{E_{pot}}$ in kJ/Mol, z dimensionslos (Mol Kationen pro Mol Glas) und $V_{mol}$ in cm$^3$ einzusetzen. $\overline{E_{pot}}$ ist jeweils nach Formel (13) und Tabelle (4) zu bestimmen. $V_{mol}$ ist der Nenner in Gleichung (18). f wird aus den Winkelbedingungen nach Formel (25) und Tabelle (6) bestimmt. $\Delta\mu$ folgt nach Gleichung (29) aus $\Delta\mu_f$ und $\Delta\mu_\chi$. $\Delta\mu_f$ folgt nach Gleichung (27) aus f. $\Delta\mu_\chi$ wird mit Gleichung (28) bestimmt; notwendiger Input ist die Packungsdichte $\chi$, die ihrerseits nach Gleichung (18) bestimmt wird. Man erhält so einen mittleren Fehler von 2,5 GPa bei der Berechnung von E.

Da die erfindungsgemäßen Gläser eine Kombination der oben angegebenen konstituierenden Phasen aufweisen, ist es für die Berechnung der Zahl der Abstands-, Winkel- und 3D-Winkelbedingungen pro Atom zweckmäßig, diese zunächst für jede konstituierende Phase numerisch anzugeben.

Die folgenden Zahlenwerte sind zunächst nach dem in DE 10 2014 119 594 A1 angegebenen Verfahren berechnet worden, wobei hier die Zahl der Winkelbedingungen für alle Kationen berechnet worden ist und zwar so wie in DE 10 2014 119 594 A1 (aber dort nur für Bor und Aluminium); außerdem ist der Ionisationsgrad einer Kation-Sauerstoff-Verbindung nicht nach der Formel (8) aus der DE 10 2014 119 594 A1, sondern nach der Formel (3) aus Alberto Garcia, Marvon Cohen, First Principles Ionicity Scales, Phys. Rev. B 1993 berechnet worden. Die dazu notwendigen Koordinationszahlen sind der unten bei der Diskussion der konstituierenden Phasen gelisteten mineralogischen Literatur entnommen worden; nach Conradt R., loc. cit., gehen wir davon aus, dass die Koordinationszahlen der Kationen im Glas gleich denen der entsprechenden Kristallphasen sind.

Es gilt:

**Tabelle 6 Zahl der Winkelbedingungen etc.**

| konstituierende Phase + Formel (auf ein einfaches Oxid normiert) | Atome / Baueinheit | Winkelbedingungen / Atom $b_{w,i}$ | 3D-Winkelbedingungen / Atom $b_{3DW,i}$ |
|---|---|---|---|
| Reedmergnerit (Na$_2$O·B$_2$O$_3$·6SiO$_2$)/8 | 3.25 | 1.431196438 | 1.431196438 |
| Kalium-Reedmergnerit (K$_2$O·B$_2$O$_3$·6SiO$_2$)/8 | 3.25 | 1.427878942 | 1.427878942 |
| Albit (Na$_2$O·Al$_2$O$_3$·6SiO$_2$)/8 | 3.25 | 1.347768648 | 1.347768648 |
| Cordierit (2MgO·2Al$_2$O$_3$·5SiO$_2$)/9 | 3.2222 | 1.239141194 | 1.239141194 |

(fortgesetzt)

| konstituierende Phase + Formel (auf ein einfaches Oxid normiert) | Atome / Baueinheit | Winkelbedingungen / Atom $b_{W,i}$ | 3D-Winkelbedingungen / Atom $b_{3DW,i}$ |
|---|---|---|---|
| Anorthit $(CaO \cdot Al_2O_3 \cdot 2SiO_2)/4$ | 3.25 | 1.174000738 | 1.174000738 |
| Diopsid $(MgO \cdot CaO \cdot 2SiO_2)/4$ | 2.5 | 1.100228274 | 1.100228274 |
| Boroxid $B_2O_3$ | 5 | 1.496075913 | 0 |
| Siliziumdioxid $SiO_2$ | 3 | 1.666666667 | 1.666666667 |

Die Rechenvorschrift zur Bestimmung der Winkelbedingungen bw pro Atom am fertigen Glas lautet damit:

$$b_W = \frac{\sum_{i=1}^{n} c_i \cdot y_i \cdot b_{W,i}}{\sum_{i=1}^{n} c_i \cdot y_i} \qquad (32)$$

wobei $c_i$ der molare Anteil der i-ten konstituierenden Phase in der betrachteten Glaszusammensetzung ist, $y_i$ die Zahl der Atome pro Baueinheit in der i-ten konstituierenden Phase und $b_{W,i}$ die Zahl der Winkelbedingungen pro Atom in der i-ten konstituierenden Phase. "n" ist die Zahl der konstituierenden Phasen.

Analog lautet die Rechenvorschrift zur Bestimmung der 3D-Winkelbedingungen $b_{3D-W}$ pro Atom am fertigen Glas:

$$b_{3D-W} = \frac{\sum_{i=1}^{n} c_i \cdot y_i \cdot b_{3D-W,i}}{\sum_{i=1}^{n} c_i \cdot y_i} \qquad (33)$$

wobei $b_{3D-W,i}$ die Zahl der 3D-Winkelbedingungen pro Atom in der i-ten konstituierenden Phase ist.

Analog lautet die Rechenvorschrift zur Bestimmung der Abstandsbedingungen $b_A$ pro Atom am fertigen Glas:

$$b_A = \frac{\sum_{i=1}^{n} c_i \cdot y_i \cdot b_{A,i}}{\sum_{i=1}^{n} c_i \cdot y_i} \qquad (34)$$

wobei $b_{A,i}$ die Zahl der Abstandsbedingungen pro Atom in der i-ten konstituierenden Phase ist.

**Verarbeitungspunkt**

Zur Berechnung des oberen Kühlpunktes $T_G$ ist zunächst die Berechnung des Verarbeitungspunktes VA vonnöten.

Der Verarbeitungspunkt VA, bei dem die Viskosität $10^4$ dPa·s beträgt, läßt sich ähnlich wie die thermische Ausdehnung über die mittlere Bindungsstärke berechnen. Aus der Literatur ist bekannt, dass der Schmelzpunkt z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83; der Schmelzpunkt wird hier *cum grano salis* mit der Verarbeitungstemperatur identifiziert.

Man macht also den Ansatz VA = $a \cdot \overline{E_{pot}}$ + b. Die Auswertung einer Reihe verschiedener silicatischer Gläser unterschiedlichen Typs (Kalk-Natron-Gläser, Borosilicatgläser, Aluminosilicatgläser) führt zu folgender Formel:

$$VA = 0.989573825 \cdot \overline{E_{pot}} \cdot \frac{°C}{kJ/mol} - 387.9923613 °C \qquad (35)$$

Man erhält so einen mittleren Fehler von 28K bei der Berechnung von VA.

**Differenz von Verarbeitungspunkt und oberem Kühlpunkt, oberer Kühlpunkt**

Im Hinblick auf die oben erwähnte Bedeutung der "Kürze" bzw. "Länge" eines Glases, also einem steilen bzw. flachen Verlauf der Viskositätskurve oberhalb des oberen Kühlpunktes, ist die Differenz zwischen Verarbeitungspunkt VA und oberem Kühlpunkt $T_G$, bei dem die Viskosität $10^{13}$ dPa·s beträgt, von besonderer Bedeutung.

Überraschenderweise hat sich herausgestellt, dass eine Beziehung zwischen dieser Differenz einerseits und der Zahl der Winkelfreiheitsgrade andererseits herrscht. Dies erlaubt eine unmittelbare Aussage über VA - $T_G$ sowie eine indirekte Bestimmung des oberen Kühlpunktes über die Beziehung $T_G$ = VA - (VA - $T_G$).

Ausgangspunkt ist die folgende Überlegung. Wie weit $T_G$ und VA voneinander entfernt sind, ist eine Frage des Temperaturverlaufs der Viskosität im Bereich der unterkühlten Schmelze. Über schmale Temperaturintervalle lässt sich dieser mit dem thermischen Aktivierungsmodell von Arrhenius beschreiben. Für eine Beschreibung über den ganzen Temperaturbereich sind aufwendigere Modelle vonnöten. Am meisten verbreitet ist das Modell von Adam und Gibbs, siehe G. Adam, J.H. Gibbs, On the Temperature Dependence of Cooperative Relaxation Properties in Glass-Forming Liquids, J. Chem. Phys. 43 (1965) S. 139-145. Es kombiniert den thermischen Aktivierungsansatz von Arrhenius für die Bewegung eines einzelnen Atoms mit einer Überlegung, wieviele Atome zusammenspielen müssen, damit eine Teilbewegung des viskosen Fließens möglich ist. Das Ergebnis ist eine Beziehung zwischen der Viskosität und der Konfigurationsentropie.

Diese Beziehung erlaubt zu verstehen, warum es "kurze" und "lange" Gläser gibt und wie das von der Zusammensetzung abhängt. Die Faustregel ist: "je höher die Zahl der Konfigurationsfreiheitsgrade ist, desto 'kürzer' ist das Glas." Die Zahl der Konfigurationsfreiheitsgrade hängt wiederum, wie oben bereits dargelegt, von der Zusammensetzung ab. In Gläsern, in denen überwiegend kovalente Bindungen überwiegen, wie die zwischen Silizium und Sauerstoff, ist diese Zahl klein. In Gläsern mit vielen ionischen Bindungen wie zwischen Natrium und Sauerstoff ist sie hoch.

Ein quantitatives Maß der "Kürze" eines Glases, das sich hervorragend für tieferschürfende physikochemische Überlegungen eignet, ist das auf Austen Angell zurückgehende Konzept der "Fragilität", siehe Charles Austen Angell, Thermodynamic aspects of the glass transition in liquids and plastic crystals, Pure & Appl. Chem. 63, No. 10 (1991), S. 1387-1392.

Dieser Hintergrund hat nahegelegt, einen Zusammenhang zwischen der Größe VA - $T_G$ und der Zahl der Konfigurationsfreiheitsgrade zu testen. Weil wirkliche Umkonfigurierungen immer eine Ausnutzung der Winkelfreiheitsgrade beinhalten, wird hier auf letztere abgestellt. Die Zahl der Winkelfreiheitsgrade pro Atom fw wird dabei aus der Zahl der winkelbezogenen Zwangsbedingungen wie folgt errechnet, vergleiche (15).

$$f_W = 5/3 - b_W = 5/3 - \frac{\sum_{i=1}^n c_i \cdot y_i \cdot b_{W,i}}{\sum_{i=1}^n c_i \cdot y_i} \tag{36}$$

Die Auswertung einer Reihe verschiedener silicatischer Gläser unterschiedlichen Typs (Kalk-Natron-Gläser, Borosilicatgläser, Aluminosilicatgläser) führt zu folgender Formel:

$$\frac{1}{VA - T_G} = (0.002665819 \cdot f_W + 0.001119212) \cdot \frac{1}{K} \tag{37}$$

Aus VA und VA - $T_G$ läßt sich $T_G$ berechnen. Man erhält einen mittleren Fehler von 22K für $T_G$.

**Auswahl geeigneter konstituierender Phasen**

Reedmergnerit

Die Herstellung eines erfindungsgemäßen Produktes soll durch eine gezielte Ausnutzung der unterschiedlichen Tendenz der verschiedenen Glasbestandteile erfolgen, von offenen heißen Glasoberflächen abzudampfen. Diese Tendenz ist besonders bei Bor und Alkalis ausgeprägt, so daß von offen liegende Oberflächen von heißen Borosilicatgläsern ("heiß" bedeutet hier: in der Umgebung des Verarbeitungspunktes, also der Temperatur, bei der die Viskosität des Glases $10^4$ dPa·s beträgt) typischerweise Alkaliborat abdampft, siehe Johannes Alphonsius Christianus van Limpt, Modeling of evaporation processes in glass melting furnaces, Dissertation, Technische Universiteit Eindhoven, 2007, ISBN: 978-90-386-1147-1.

Im Hinblick darauf ist Reedmergnerit ein essentieller Bestandteil der erfindungsgemäßen Gläser. Bei hohen Temperaturen, also typischerweise bei VA, dissoziiert Reedmergnerit zum Teil in Natriumborat, das abdampft, und in SiO2, das in der Schmelze zurückbleibt. Bei tiefen Temperaturen, also typischerweise $T_G$, liegt Reedmergnerit nicht-dissoziiert vor und ist aus $SiO_4$- und $BO_4$-Tetraedern aufgebaut, also ein Tektosilicat. Die das Gerüst ausstopfenden Natriumionen sind 5-fach koordiniert, siehe Appleman, D.E., Clark, J.R.: Crystal structure of reedmergnerite, a boron albite, and its relation to feldspar crystal chemistry. Am. J. Sci. 50, 1827-1850 (1965). Dies ist für den ebenfalls gewünschten hohen E-Modul von Vorteil.

Im Hinblick auf den im Vergleich zu dem hier gewünschten Maximalwert von $CTE_{Glas}$ hohen Wert des $CTE_{Glas}$ von Reedmergneritglas beträgt der Anteil von Reedmergnerit maximal 50 Mol%. Unter einem Mol Reedmergnerit wird ein Mol $(Na_2O \cdot B_2O_3 \cdot 6SiO_2)/8$ verstanden.

Der Anteil von Reedmergnerit am jeweiligen erfindungsgemäßen Kernglas liegt bevorzugt in einem Bereich von 10 bis 40 Mol%, weiter bevorzugt von 12 bis 36 Mol%.

Der Anteil an Reedmergnerit in dem erfindungsgemäßen Kernglas beträgt 10 bis 50 Mol%, bevorzugt 11 bis 40 Mol%, weiter bevorzugt 12 bis 36 Mol%, weiter bevorzugt 13 bis 34 Mol%, weiter bevorzugt 14 bis 32 Mol%, weiter bevorzugt 15 bis 30 Mol%, weiter bevorzugt 16 bis 28 Mol%, weiter bevorzugt 17 bis 26 Mol%. Der Anteil an Reedmergnerit in dem erfindungsgemäßen Kernglas beträgt mindestens 10 Mol%, bevorzugt mindestens 11 Mol%, weiter bevorzugt mindestens 12 Mol%, weiter bevorzugt mindestens 13 Mol%, weiter bevorzugt mindestens 14 Mol%, weiter bevorzugt mindestens 15 Mol%, weiter bevorzugt mindestens 16 Mol%, weiter bevorzugt mindestens 17 Mol%. Der Anteil an Reedmergnerit in dem erfindungsgemäßen Kernglas beträgt höchstens 50 Mol%, bevorzugt höchstens 40 Mol%, weiter bevorzugt höchstens 36 Mol%, weiter bevorzugt höchstens 34 Mol%, weiter bevorzugt höchstens 32 Mol%, weiter bevorzugt höchstens 30 Mol%, weiter bevorzugt höchstens 28 Mol%, weiter bevorzugt höchstens 26 Mol%.

In einigen Ausführungsformen ist die Zusammensetzung des Oberseiten-Oberflächenglases im Vergleich zur Zusammensetzung des Kernglases insbesondere bedingt durch das Herstellungsverfahren derart verändert, dass sich die Zusammensetzung des Oberseiten-Oberflächenglases nicht mehr mit Hilfe eines erfindungsgemäßen System konstituierender Phasen beschreiben lässt, insbesondere da sich negative Anteile einer oder mehrerer Phasen ergeben. Dies ist jedoch nicht bei allen Ausführungsformen der Fall. Die Erfindung umfasst auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil an Reedmergnerit in einem solchen erfindungsgemäßen Oberseiten-Oberflächenglas beträgt beispielsweise 0 bis 20,0 Mol%, 0,1 bis 15,0 Mol%, 0,2 bis 10,0 Mol%, 0,5 bis 9,0 Mol%, oder 1,0 bis 8,0 Mol%. Der Anteil an Reedmergnerit in dem erfindungsgemäßen Oberseiten-Oberflächenglas kann beispielsweise mindestens 0,1 Mol%, mindestens 0,2 Mol%, mindestens 0,5 Mol%, oder mindestens 1,0 Mol% betragen. Der Anteil an Reedmergnerit in dem erfindungsgemäßen Oberflächenglas kann beispielsweise höchstens 20,0 Mol%, höchstens 15,0 Mol%, höchstens 10,0 Mol%, höchstens 9,0 Mol%, oder höchstens 8,0 Mol% betragen.

Bevorzugt liegt das Verhältnis des Anteils an Reedmergnerit im Kernglas zum Anteil an Reedmergnerit im Oberseiten-Oberflächenglas in einem Bereich von 1,4:1 bis 150:1, weiter bevorzugt von 1,5:1 bis 100:1, weiter bevorzugt von 1,6:1 bis 75:1, weiter bevorzugt von 1,7:1 bis 50:1, beispielsweise von 2,0:1 bis 40:1, von 2,2:1 bis 30:1, von 2,4:1 bis 20:1, oder von 2,5:1 bis 10,0:1. Bevorzugt beträgt das Verhältnis des Anteils an Reedmergnerit im Kernglas zum Anteil an Reedmergnerit im Oberseiten-Oberflächenglas mindestens 1,4:1, weiter bevorzugt mindestens 1,5:1, weiter bevorzugt mindestens 1,6:1, weiter bevorzugt mindestens 1,7:1, beispielsweise mindestens 2,0:1, mindestens 2,2:1, mindestens 2,4:1, oder mindestens 2,5:1. Bevorzugt beträgt das Verhältnis des Anteils an Reedmergnerit im Kernglas zum Anteil an Reedmergnerit im Oberseiten-Oberflächenglas höchstens 150:1, höchstens 100:1, höchstens 75:1, höchstens 50:1, höchstens 40:1, höchstens 30:1, höchstens 20:1, oder höchstens 10:1. Gewisse Unterschiede des Anteils an Reedmergnerit zwischen Kernglas und Oberseiten-Oberflächenglas sind vorteilhaft, da sie in besonderem Maße zu den gewünschten CTE-Unterschieden zwischen Kernglas und Oberseiten-Oberflächenglas beitragen. Es kann jedoch vorteilhaft sein, die Unterschiede des Reedmergneritanteils zu begrenzen, um sehr große CTE-Unterschiede zu vermeiden.

Siliziumdioxid

Im Hinblick auf den niedrigen gewünschten Maximalwert von $CTE_{Glas}$ wird das Reedmergneritglas sinnvollerweise mit reinem $SiO_2$ als weiterer konstituierender Phase kombiniert. Ferner ist bekannt, daß ein hoher $SiO_2$-Anteil sinnvoll für eine hohe chemische Beständigkeit des Glases ist. Auch aus diesem Grund ist ein hoher Anteil von $SiO_2$ als konstituierender Phase erwünscht.

Dieser Anteil ist allerdings aus mehreren Gründen begrenzt. Einmal hat $SiO_2$ nicht den oben beschriebenen, zur Erzeugung eines CTE-Gradienten notwendigen Effekt, den Reedmergnerit hat. Außerdem ist $SiO_2$-Glas aus nichtgestopften $SiO_4$-Tetraedern aufgebaut, was von Nachteil für den gewünschten hohen E-Modul ist. Schließlich bewirkt ein zu hoher Anteil von $SiO_2$ als konstituierender Phase einen aus verarbeitungstechnischer Sicht zu hohen Verarbeitungspunkt des Glases.

Der Anteil an Siliziumdioxid am erfindungsgemäßen Kernglas beträgt 20 bis 75 Mol%, beispielsweise 25 bis 70 Mol%, 30 bis 65 Mol%, 35 bis 62 Mol%, oder 40 bis 60 Mol%. Der Anteil der konstituierenden Phase Siliziumdioxid am Kernglas kann beispielsweise mindestens 20 Mol%, mindestens 25 Mol%, mindestens 30 Mol%, mindestens 35 Mol%, oder mindestens 40 Mol% betragen. Der Anteil der konstituierenden Phase Siliziumdioxid am Kernglas kann beispielsweise höchstens 75 Mol%, höchstens 70 Mol%, höchstens 65 Mol%, höchstens 62 Mol%, oder höchstens 60 Mol% betragen.

Wie oben beschrieben umfasst die Erfindung auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil an Siliziumdioxid an einem solchen Oberseiten-Oberflächenglas beträgt bevorzugt 50 bis 90 Mol%, beispielsweise 60 bis 88 Mol%, 70 bis 86 Mol%, oder 72 bis 84 Mol%. Der Anteil der konstituierenden Phase Siliziumdioxid am Oberseiten-Oberflächenglas kann beispielsweise mindestens 50 Mol%, mindestens 60 Mol%, mindestens 70 Mol%, oder mindestens 72 Mol% betragen. Der Anteil der konstituierenden Phase Siliziumdioxid am Oberseiten-Oberflächenglas kann beispielsweise höchstens 90 Mol%, höchstens 88 Mol%, höchstens 86 Mol%, oder höchstens 84 Mol% betragen.

Bevorzugt liegt das Verhältnis des Anteils an Siliziumdioxid im Oberseiten-Oberflächenglas zum Anteil an Siliziumdioxid im Kernglas in einem Bereich von 1,1:1 bis 2,0:1, weiter bevorzugt von 1,2:1 bis 1,9:1, weiter bevorzugt von 1,3:1 bis 1,8:1, weiter bevorzugt von 1,4:1 bis 1,7:1. Bevorzugt beträgt das Verhältnis des Anteils an Siliziumdioxid im Oberseiten-Oberflächenglas zum Anteil an Siliziumdioxid im Kernglas mindestens 1,1:1:1, weiter bevorzugt mindestens 1,2:1, weiter bevorzugt mindestens 1,3:1, weiter bevorzugt mindestens 1,4:1. Bevorzugt beträgt das Verhältnis des Anteils an Siliziumdioxid im Oberseiten-Oberflächenglas zum Anteil an Siliziumdioxid im Kernglas höchstens 2,0:1, weiter bevorzugt höchstens 1,9:1, weiter bevorzugt höchstens 1,8:1, weiter bevorzugt höchstens 1,7:1.

### Kalium-Reedmergnerit

Um die Entglasungsstabilität zu erhöhen, kann dem Glas noch das Kalium-Analogon des Reedmergnerit beigemengt werden. Das fertige Glas enthält im Falle einer solchen Beimengung als Alkali nicht nur Natrium, sondern auch Kalium und ist von daher entglasungsstabiler.

Die entsprechende konstituierende Phase wird nachfolgend als "Kalium-Reedmergnerit" bezeichnet, da es als Kalium-Analogon des Reedmergnerit mit Danburitstruktur aufgefasst werden kann, siehe Mineralogical Magazine 57 (1993) 157-164

Unter einem Mol Kalium-Reedmergnerit wird ein Mol $(K_2O \cdot B_2O_3 \cdot 6SiO_2)/8$ verstanden.

Der Anteil an Kalium-Reedmergnerit am erfindungsgemäßen Kernglas beträgt 0 bis 30 Mol%, beispielsweise 1,0 bis 25,0 Mol%, 2,0 bis 20,0 Mol%, oder 2,5 bis 15,0 Mol%. Der Anteil an Kalium-Reedmergnerit am erfindungsgemäßen Kernglas beispielsweise mindestens 1,0 Mol%, mindestens 2,0 Mol%, oder mindestens 2,5 Mol% betragen. Der Anteil an Kalium-Reedmergnerit am Kernglas kann beispielsweise höchstens 30,0 Mol%, höchstens 25,0 Mol%, höchstens 20,0 Mol%, oder höchstens 15,0 Mol% betragen.

Wie oben beschrieben umfasst die Erfindung auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil an Kalium-Reedmergnerit an einem solchen Oberseiten-Oberflächenglas beträgt 0 bis 20,0 Mol%, beispielsweise 0,5 bis 15,0 Mol%, 1,0 bis 12,5 Mol%, oder 2,0 bis 10,0 Mol%. Der Anteil an Kalium-Reedmergnerit am Oberseiten-Oberflächenglas beispielsweise mindestens 0,5 Mol%, mindestens 1,0 Mol%, oder mindestens 2,0 Mol% betragen. Der Anteil an Kalium-Reedmergnerit am Oberseiten-Oberflächenglas kann beispielsweise höchstens 20,0 Mol%, höchstens 15,0 Mol%, höchstens 12,5 Mol%, oder höchstens 10,0 Mol% betragen.

Bevorzugt liegt das Verhältnis des Anteils an Kalium-Reedmergnerit im Kernglas zum Anteil an Kalium-Reedmergnerit im Oberseiten-Oberflächenglas in einem Bereich von 1,05:1 bis 2,00:1, weiter bevorzugt von 1,10:1 bis 1,75:1, weiter bevorzugt von 1,15:1 bis 1,50:1. Bevorzugt beträgt das Verhältnis des Anteils an Kalium-Reedmergnerit im Kernglas zum Anteil an Kalium-Reedmergnerit im Oberseiten-Oberflächenglas mindestens 1,05:1, weiter bevorzugt mindestens 1,10:1, weiter bevorzugt mindestens 1,15:1. Bevorzugt beträgt das Verhältnis des Anteils an Kalium-Reedmergnerit im Kernglas zum Anteil an Kalium-Reedmergnerit im Oberseiten-Oberflächenglas höchstens 2,00:1, höchstens 1,75:1, oder höchstens 1,50:1.

### Dibortrioxid

Dibortrioxid als konstituierende Phase dampft ebenfalls ab, so daß die Anwesenheit von $B_2O_3$ den o.a. Effekt verstärkt. Das Maß der Abdampfung ist durch die relative Luftfeuchte steuerbar; im Falle der Anwesenheit von H2O dampft $B_2O_3$ in Form von Dioxoborsäure HBO2 ab. Ein zu hoher Anteil von $B_2O_3$ senkt allerdings den E-Modul.

Der Anteil der konstituierenden Phase Dibortrioxid am erfindungsgemäßen Kernglas beträgt 0 bis 20 Mol%, bevorzugt 0 bis 15 Mol%, weiter bevorzugt 0 bis 10 Mol%, weiter bevorzugt 0,5 bis 8 Mol%, weiter bevorzugt 0,8 bis 7 Mol%, weiter bevorzugt 1 bis 6 Mol%, weiter bevorzugt 1,5 bis 5,5 Mol%, weiter bevorzugt 2 bis 5 Mol%, weiter bevorzugt 2,5 bis 4,5 Mol%, weiter bevorzugt 3 bis 4 Mol%. Der Anteil der konstituierenden Phase Dibortrioxid am Kernglas kann beispielsweise mindestens 0,5 Mol%, mindestens 0,8 Mol%, mindestens 1,0 Mol%, mindestens 1,5 Mol%, mindestens 2,0 Mol%, mindestens 2,5 Mol%, oder mindestens 3,0 Mol% betragen. Der Anteil der konstituierenden Phase Dibortrioxid am Kernglas kann beispielsweise höchstens 20 Mol%, höchstens 15 Mol%, höchstens 10,0 Mol%, höchstens 8,0 Mol%, höchstens 7,0 Mol%, höchstens 6,0 Mol%, höchstens 5,5 Mol%, höchstens 5,0 Mol%, höchstens 4,5 Mol%, oder höchstens 4,0 Mol% betragen.

Wie oben beschrieben umfasst die Erfindung auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil der konstituierenden Phase Dibortrioxid an einem solchen Oberseiten-Oberflächenglas beträgt beispielsweise 0 bis 15 Mol%, 0 bis 10 Mol%, 0,5 bis 8 Mol%, 0,8 bis 7 Mol%, 1 bis 6 Mol%, 1,5 bis 5,5 Mol%, 2 bis 5 Mol%, 2,5 bis 4,5 Mol%, oder 3 bis 4 Mol%. Der Anteil der konstituierenden Phase Dibortrioxid am Oberseiten-Oberflächenglas kann beispielsweise mindestens 0,5 Mol%, mindestens 0,8 Mol%, mindestens 1,0 Mol%, mindestens 1,5 Mol%, oder mindestens 2,0 Mol% betragen. Der Anteil der konstituierenden Phase Dibortrioxid am Oberseiten-Oberflächenglas kann beispielsweise höchstens 15 Mol%, höchstens 12,5 Mol%, höchstens 10,0 Mol%, höchstens 9,0 Mol%, höchstens 8,0 Mol%, höchstens 7,0 Mol%, höchstens 6,0 Mol%, höchstens 5,5 Mol%, höchstens 5,0 Mol%, höchstens 4,5 Mol%, oder höchstens 4,0 Mol% betragen.

Bevorzugt liegt das Verhältnis des Anteils der konstituierenden Phase Dibortrioxid am Kernglas zum Anteil der konstituierenden Phase Dibortrioxid am Oberseiten-Oberflächenglas in einem Bereich von 1,1:1 bis 3,5:1, weiter bevorzugt von 1,2:1 bis 3,0:1, weiter bevorzugt von 1,4:1 bis 2,5:1, weiter bevorzugt von 1,6:1 bis 2,2:1, weiter bevorzugt von 1,7:1 bis 2,0:1. Bevorzugt beträgt das Verhältnis des Anteils an Dibortrioxid im Kernglas zum Anteil an Dibortrioxid im Oberseiten-Oberflächenglas mindestens 1,1:1, weiter bevorzugt mindestens 1,2:1, weiter bevorzugt mindestens 1,4:1, beispielsweise mindestens 1,6:1, oder mindestens 1,7:1. Bevorzugt beträgt das Verhältnis des Anteils an Dibortrioxid im Kernglas zum Anteil an Dibortrioxid im Oberseiten-Oberflächenglas höchstens 3,5:1, höchstens 3,0:1, höchstens 2,5:1, höchstens 2,2:1, oder höchstens 2,0:1.

Anorthit

Reedmergnerit und sein Kalium-Analogon sind alkalihaltig. Alkalihaltige Gläser haben, wie gesagt, einen hohen Ausdehnungskoeffizienten. Zur Einstellung des Ausdehnungskoeffizienten auf den gewünschten Wert können $SiO_2$ und $B_2O_3$ beigemischt werden, die aber bzgl. des VA und des E-Moduls nur eingeschränkt verwendet werden können.

Eine weitere Phase, die vorhanden sein kann und deren Beitrag den Ausdehnungskoeffizienten zu mittleren Werten verschiebt, ohne die o.a. Nachteile von $SiO_2$ und $B_2O_3$ zu haben ist das Erdalkali-alumino-silicat Anorthit. Unter einem Mol Anorthit wird ein Mol $(CaO \cdot Al_2O_3 \cdot 2SiO_2)/4$ verstanden.

Der Vorteil dieser Komponente bei den erfindungsgemäßen Gläsern ist, daß Aluminium kaum eine Abdampfneigung hat und (auch wenn bei den u.a. Beispielen eine gewisse Verarmung der Oberfläche an Calcium zu beobachten ist) auch die Erdalkalis eine geringere Abdampftendenz als die Alkalis haben, siehe van Limpt, loc. cit., so daß durch die Anwesenheit dieser Phasen verhindert werden kann, daß sich durch das Abdampfen an der Oberfläche reines Quarzglas bildet, was wegen seiner extremen Eigenschaften (sehr hoher $T_G$ usw.) nicht wünschenswert ist.

Der Anteil an Anorthit am Kernglas liegt bei den erfindungsgemäßen Gläsern bevorzugt in einem Bereich von 0 bis 20 Mol%, oder 0 bis 15 Mol%, beispielsweise von 0 bis 10,0 Mol%, von 0,5 bis 9,0 Mol%, 1,0 bis 8,0 Mol%, 1,5 bis 7,0 Mol%, von 2,0 bis 6,0 Mol%, von 2,5 bis 5,0 Mol%, oder von 3,0 bis 4,5 Mol%. Der Anteil an Anorthit am Kernglas kann beispielsweise mindestens 0,5 Mol%, mindestens 1,0 Mol%, mindestens 1,5 Mol%, mindestens 2,0 Mol%, mindestens 2,5 Mol%, oder mindestens 3,0 Mol% betragen. Der Anteil an Anorthit am Kernglas kann beispielsweise höchstens 20 Mol%, höchstens 15 Mol%, höchstens 10,0 Mol%, höchstens 9,0 Mol%, höchstens 8,0 Mol%, höchstens 7,0 Mol%, höchstens 6,0 Mol%, höchstens 5,0 Mol%, oder höchstens 4,5 Mol% betragen. In einigen Ausführungsformen beträgt der Anteil an Anorthit am Kernglas höchstens 0,2 Mol% oder höchstens 0,1 Mol%, oder das Kernglas ist sogar frei von Anorthit.

Wie oben beschrieben umfasst die Erfindung auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil an Anorthit an einem solchen Oberseiten-Oberflächenglas kann beispielsweise in einem Bereich von 0 bis 10,0 Mol% liegen, insbesondere in einem Bereich von 0 bis 7,5 Mol%, von 0 bis 5,0 Mol%, von 0,1 bis 4,0 Mol%, von 0,2 bis 3,0 Mol%, von 0,5 bis 2,5 Mol%, oder von 1,0 bis 2,0 Mol%. Der Anteil an Anorthit am Oberseiten-Oberflächenglas kann beispielsweise mindestens 0,1 Mol%, mindestens 0,2 Mol%, mindestens 0,5 Mol%, oder mindestens 1,0 Mol% betragen. Der Anteil an Anorthit am Oberseiten-Oberflächenglas kann beispielsweise höchstens 10,0 Mol%, höchstens 7,5 Mol%, höchstens 5,0 Mol%, höchstens 4,0 Mol%, höchstens 3,0 Mol%, höchstens 2,5 Mol%, oder höchstens 2,0 Mol% betragen. In einigen Ausführungsformen beträgt der Anteil an Anorthit am Oberseiten-Oberflächenglas höchstens 0,2 Mol% oder höchstens 0,1 Mol%, oder das Oberseiten-Oberflächenglas ist sogar frei von Anorthit.

Bevorzugt liegt das Verhältnis des Anteils der konstituierenden Phase Anorthit am Kernglas zum Anteil der konstituierenden Phase Anorthit am Oberseiten-Oberflächenglas in einem Bereich von 1,1:1 bis 10,0:1, weiter bevorzugt von 1,2:1 bis 7,5:1, weiter bevorzugt von 1,3:1 bis 5,0:1, weiter bevorzugt von 1,4:1 bis 4,0:1, weiter bevorzugt von 1,5:1 bis 3,5:1. Bevorzugt beträgt das Verhältnis des Anteils an Anorthit im Kernglas zum Anteil an Anorthit im Oberseiten-Oberflächenglas mindestens 1,1:1, weiter bevorzugt mindestens 1,2:1, weiter bevorzugt mindestens 1,3:1, beispielsweise mindestens 1,4:1, oder mindestens 1,5:1. Bevorzugt beträgt das Verhältnis des Anteils an Anorthit im Kernglas zum Anteil an Anorthit im Oberseiten-Oberflächenglas höchstens 10,0:1, höchstens 7,5:1, höchstens 5,0:1, höchstens 4,0:1, oder höchstens 3,5:1.

Weitere konstituierende Phasen

Zusätzlich zu den oben beschrieben konstituierenden Phasen Reedmergnerit, Siliziumdioxid, Kalium-Reedmergnerit, Dibortrioxid und Anorthit weist das Glas bevorzugt eine Zusammensetzung auf, die durch ein System konstituierender Phasen gekennzeichnet ist, das weitere konstituierende Phasen umfasst, insbesondere Albit oder Cordierit und Diopsid gemäß den bereits oben beschriebenen besonders bevorzugten Kerngläsern.

*Albit*

Zur Unterdrückung einer möglichen Entmischungsneigung eines reinen Borosilicatsystems kann als weitere Phase das Aluminium-Analogon des Reedmergnerit beigegeben werden, der Albit (American Mineralogist, Volume 81, pages 1344-1349, 1996), siehe zur Entmischungsfrage J.W. Greig, Immiscibility in silicate melts, Am. J. Sci., 5th ser., Vol. 13 (1927), 1-44 und 133-154. Unter einem Mol Albit wird erfindungsgemäß ein Mol $(Na_2O \cdot Al_2O_3 \cdot 6SiO_2)/8$ verstanden. Bei hohen Anteilen an Albit kann es zu einer Verschlechterung der Schmelzbarkeit kommen.

Eines der besonders bevorzugten Kerngläser weist eine Zusammensetzung auf, die durch die folgenden (abschließend aufgezählten) konstituierenden Phasen gekennzeichnet ist: Reedmergnerit, Kalium-Reedmergnerit, Albit, Anorthit, Dibortrioxid, Siliziumdioxid.

Der Anteil an Albit am Kernglas kann beispielsweise 0 bis 50 Mol%, bevorzugt 0,5 bis 45 Mol%, weiter bevorzugt 1 bis 40 Mol%, weiter bevorzugt 1,5 bis 35 Mol%, weiter bevorzugt 2 bis 33 Mol%, weiter bevorzugt 4 bis 30 Mol%, weiter bevorzugt 5 bis 27 Mol%, weiter bevorzugt 7 bis 25 Mol%, weiter bevorzugt 8 bis 22 Mol%, weiter bevorzugt 10 bis 20 Mol%, weiter bevorzugt 11 bis 18 Mol%, weiter bevorzugt 12 bis 16 Mol% betragen. Der Anteil an Albit am Kernglas kann beispielweise mindestens 0,5 Mol%, mindestens 1,0 Mol%, mindestens 1,5 Mol%, mindestens 2,0 Mol%, mindestens 4,0 Mol%, mindestens 5,0 Mol%, mindestens 7,0 Mol%, mindestens 8,0 Mol%, mindestens 10,0 Mol%, mindestens 11,0 Mol%, oder mindestens 12,0 Mol% betragen. Der Anteil an Albit am Kernglas kann beispielsweise höchstens 50 Mol%, höchstens 45 Mol%, höchstens 40 Mol%, höchstens 35 Mol%, höchstens 33 Mol%, höchstens 30 Mol%, höchstens 27 Mol%, höchstens 22 Mol%, höchstens 20 Mol%, höchstens 18 Mol%, oder höchstens 16 Mol% betragen.

Wie oben beschrieben umfasst die Erfindung auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil an Albit an einem solchen Oberseiten-Oberflächenglas kann beispielsweise 0 bis 50 Mol%, bevorzugt 0,5 bis 45 Mol%, weiter bevorzugt 1 bis 40 Mol%, weiter bevorzugt 1,5 bis 35 Mol%, weiter bevorzugt 2 bis 33 Mol%, weiter bevorzugt 4 bis 30 Mol%, weiter bevorzugt 5 bis 27 Mol%, weiter bevorzugt 7 bis 25 Mol%, weiter bevorzugt 8 bis 22 Mol%, weiter bevorzugt 10 bis 20 Mol%, weiter bevorzugt 11 bis 18 Mol%, weiter bevorzugt 12 bis 16 Mol% betragen. Der Anteil an Albit am Oberseiten-Oberflächenglas kann beispielweise mindestens 0,5 Mol%, mindestens 1,0 Mol%, mindestens 1,5 Mol%, mindestens 2,0 Mol%, mindestens 4,0 Mol%, mindestens 5,0 Mol%, mindestens 7,0 Mol%, mindestens 8,0 Mol%, mindestens 10,0 Mol%, mindestens 11,0 Mol%, oder mindestens 12,0 Mol% betragen. Der Anteil an Albit am Oberseiten-Oberflächenglas kann beispielsweise höchstens 50 Mol%, höchstens 45 Mol%, höchstens 40 Mol%, höchstens 35 Mol%, höchstens 33 Mol%, höchstens 30 Mol%, höchstens 27 Mol%, höchstens 22 Mol%, höchstens 20 Mol%, höchstens 18 Mol%, oder höchstens 16 Mol% betragen.

Bevorzugt liegt das Verhältnis des Anteils der konstituierenden Phase Albit am Kernglas zum Anteil der konstituierenden Phase Albit am Oberseiten-Oberflächenglas in einem Bereich von 0,5:1 bis 2,0:1, weiter bevorzugt von 0,6:1 bis 1,5:1, weiter bevorzugt von 0,7:1 bis 1,3:1. Bevorzugt beträgt das Verhältnis des Anteils an Albit im Kernglas zum Anteil an Albit im Oberseiten-Oberflächenglas mindestens 0,5:1, weiter bevorzugt mindestens 0,6:1, weiter bevorzugt mindestens 0,7:1. Bevorzugt beträgt das Verhältnis des Anteils an Albit im Kernglas zum Anteil an Albit im Oberseiten-Oberflächenglas höchstens 2,0:1, höchstens 1,5:1, oder höchstens 1,3:1. In einigen Ausführungsformen kann das Verhältnis des Anteils an Albit im Kernglas zum Anteil an Albit im Oberseiten-Oberflächenglas mehr als 1:1 betragen, beispielsweise mindestens 1,1:1 oder mindestens 1,2:1.

*Cordierit, Diopsid*

Es können jedoch auch weitere Phasen beigemischt werden, deren Beitrag den Ausdehnungskoeffizienten zu mittleren Werten verschiebt, ohne die o.a. Nachteile von $SiO_2$ und $B_2O_3$ zu haben. Dies sind die Erdalkali-(alumino-)silicate Cordierit und Diopsid. Unter einem Mol Cordierit wird ein Mol $(2MgO \cdot 2Al_2O_3 \cdot 5SiO_2)/9$ verstanden. Unter einem Mol Diopsid wird ein Mol $(MgO \cdot CaO \cdot 2SiO_2)/4$ verstanden.

Der Vorteil dieser beiden Komponenten ist ähnlich wie der Vorteil von Anorthit insbesondere, daß durch die Anwesenheit dieser Phasen verhindert werden kann, daß sich durch das Abdampfen an der Oberfläche reines Quarzglas bildet, was wegen seiner extremen Eigenschaften (sehr hoher $T_G$ usw.) nicht wünschenswert ist.

Eines der besonders bevorzugten Kerngläser weist eine Zusammensetzung auf, die durch die folgenden (abschließend aufgezählten) konstituierenden Phasen gekennzeichnet ist: Reedmergnerit, Kalium-Reedmergnerit, Cordierit, Anorthit, Diopsid, Dibortrioxid, Siliziumdioxid.

Der Anteil an Cordierit am Kernglas kann beispielsweise 0 bis 20 Mol%, bevorzugt 0 bis 15 Mol%, weiter bevorzugt 0 bis 10,0 Mol%, weiter bevorzugt 0,5 bis 9,0 Mol%, weiter bevorzugt 1,0 bis 8,0 Mol%, weiter bevorzugt 1,5 bis 7,0 Mol%, weiter bevorzugt 2,0 bis 6,0 Mol%, weiter bevorzugt 2,5 bis 5,0 Mol%, weiter bevorzugt 3,0 bis 4,0 Mol% betragen. Der Anteil an Cordierit am Kernglas kann beispielweise mindestens 0,5 Mol%, mindestens 1,0 Mol%, mindestens 1,5 Mol%, mindestens 2,0 Mol%, mindestens 2,5 Mol%, oder mindestens 3,0 Mol%. Der Anteil an Cordierit am Kernglas kann beispielsweise höchstens 20 Mol%, höchstens 15 Mol%, höchstens 10,0 Mol%, höchstens 9,0 Mol%, höchstens 8,0 Mol%, höchstens 7,0 Mol%, höchstens 6,0 Mol%, höchstens 5,0 Mol%, oder höchstens 4,0 Mol% betragen.

Wie oben beschrieben umfasst die Erfindung auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil an Cordierit an einem solchen Oberseiten-Oberflächenglas kann beispielsweise 0 bis 20 Mol%, bevorzugt 0 bis 15 Mol%, weiter bevorzugt 0 bis 10,0 Mol%, weiter bevorzugt 0,5 bis 9,0 Mol%, weiter bevorzugt 1,0 bis 8,0 Mol%, weiter bevorzugt 1,5 bis 7,0 Mol%, weiter bevorzugt 2,0 bis 6,0 Mol%, weiter bevorzugt 2,5 bis 5,0 Mol%, weiter bevorzugt 3,0 bis 4,0 Mol% betragen. Der Anteil an Cordierit am Oberseiten-Oberflächenglas kann beispielweise mindestens 0,5 Mol%, mindestens 1,0 Mol%, mindestens 1,5 Mol%, mindestens 2,0 Mol%, mindestens 2,5 Mol%, oder mindestens 3,0 Mol% betragen. Der Anteil an Cordierit am Oberseiten-Oberflächenglas kann beispielsweise höchstens 20 Mol%, höchstens 15 Mol%, höchstens 10,0 Mol%, höchstens 9,0 Mol%, höchstens 8,0 Mol%, höchstens 7,0 Mol%, höchstens 6,0 Mol%, höchstens 5,0 Mol%, oder höchstens 4,0 Mol% betragen.

Bevorzugt liegt das Verhältnis des Anteils der konstituierenden Phase Cordierit am Kernglas zum Anteil der konstituierenden Phase Cordierit am Oberseiten-Oberflächenglas in einem Bereich von 0,5:1 bis 2,0:1, weiter bevorzugt von 0,6:1 bis 1,5:1, weiter bevorzugt von 0,7:1 bis 1,3:1, beispielsweise 0,8:1 bis 1:1. Bevorzugt beträgt das Verhältnis des Anteils an Cordierit im Kernglas zum Anteil an Cordierit im Oberseiten-Oberflächenglas mindestens 0,5:1, weiter bevorzugt mindestens 0,6:1, weiter bevorzugt mindestens 0,7:1, beispielsweise mindestens 0,8:1. Bevorzugt beträgt das Verhältnis des Anteils an Cordierit im Kernglas zum Anteil an Cordierit im Oberseiten-Oberflächenglas höchstens 2,0:1, höchstens 1,5:1, oder höchstens 1,3:1, beispielsweise höchstens 1:1.

Der Anteil an Diopsid am Kernglas kann beispielsweise 0 bis 20 Mol%, oder 0 bis 17,5 Mol% bevorzugt 0 bis 15,0 Mol%, weiter bevorzugt 0,5 bis 14,0 Mol%, weiter bevorzugt 1,0 bis 13,0 Mol%, weiter bevorzugt 2,0 bis 12,0 Mol%, weiter bevorzugt 3,0 bis 11,0 Mol%, weiter bevorzugt 5,0 bis 10,0 Mol%, weiter bevorzugt 6,0 bis 9,0 Mol%, weiter bevorzugt 7,0 bis 8,0 Mol% betragen. Der Anteil an Diopsid am Kernglas kann beispielweise mindestens 0,5 Mol%, mindestens 1,0 Mol%, mindestens 2,0 Mol%, mindestens 3,0 Mol%, mindestens 5,0 Mol%, mindestens 6,0 Mol%, oder mindestens 7,0 Mol% betragen. Der Anteil an Diopsid am Kernglas kann beispielsweise höchstens 20 Mol%, höchstens 15,0 Mol%, höchstens 14,0 Mol%, höchstens 13,0 Mol%, höchstens 12,0 Mol%, höchstens 11,0 Mol%, höchstens 10,0 Mol%, höchstens 9,0 Mol%, oder höchstens 8,0 Mol% betragen.

Wie oben beschrieben umfasst die Erfindung auch Ausführungsformen, bei denen sich die Zusammensetzung des Oberseiten-Oberflächenglases mit demselben Phasensystem beschreiben lässt wie die Zusammensetzung des Kernglases, ohne dass sich negative Phasenanteile für irgendeine der Phasen ergeben.

Der Anteil an Diopsid an einem solchen Oberseiten-Oberflächenglas kann beispielsweise 0 bis 10,0 Mol%, bevorzugt 0 bis 7,5 Mol%, weiter bevorzugt 0 bis 5,0 Mol%, weiter bevorzugt 0 bis 4,0 Mol%, weiter bevorzugt 0,1 bis 3,0 Mol%, weiter bevorzugt 0,2 bis 2,0 Mol%, weiter bevorzugt 0,5 bis 1,5 Mol%, weiter bevorzugt 0,7 bis 1,0 Mol% betragen. Der Anteil an Diopsid am Oberseiten-Oberflächenglas kann beispielweise mindestens 0,1 Mol%, mindestens 0,2 Mol%, mindestens 0,5 Mol%, oder mindestens 0,7 Mol%. Der Anteil an Diopsid am Oberseiten-Oberflächenglas kann beispielsweise höchstens 10,0 Mol%, höchstens 7,5 Mol%, höchstens 5,0 Mol%, höchstens 4,0 Mol%, höchstens 3,0 Mol%, höchstens 2,0 Mol%, höchstens 1,5 Mol%, oder höchstens 1,0 Mol% betragen.

Bevorzugt liegt das Verhältnis des Anteils der konstituierenden Phase Diopsid am Kernglas zum Anteil der konstituierenden Phase Diopsid am Oberseiten-Oberflächenglas in einem Bereich von 1,1:1 bis 50:1, weiter bevorzugt von 1,5:1 bis 25:1, weiter bevorzugt von 2,0:1 bis 20:1, beispielsweise 5,0:1 bis 15:1 oder 7,5:1 bis 12,5:1. Bevorzugt beträgt das Verhältnis des Anteils an Diopsid im Kernglas zum Anteil an Diopsid im Oberseiten-Oberflächenglas mindestens 1,1:1, weiter bevorzugt mindestens 1,5:1, weiter bevorzugt mindestens 2,0:1, beispielsweise mindestens 5,0:1 oder mindestens 7,5:1. Bevorzugt beträgt das Verhältnis des Anteils an Diopsid im Kernglas zum Anteil an Diopsid im Oberseiten-Oberflächenglas höchstens 50:1, höchstens 25:1, oder höchstens 20:1, beispielsweise höchstens 15:1 oder höchstens 12,5:1.

Weitere Komponenten

Zusätzlich zu den bereits genannten Komponenten kann das Glas weitere Bestandteile enthalten, die hierin als "Rest" bezeichnet werden. Der Anteil des Restes an dem erfindungsgemäßen Glas beträgt vorzugsweise höchstens 5 Mol-%, um die durch sorgsame Auswahl geeigneter Grundgläser eingestellten Glaseigenschaften nicht zu stören. In besonders bevorzugten Ausführungsformen beträgt der Anteil an Rest in dem Glas höchstens 3 Mol-%, mehr bevorzugt höchstens 2 Mol-% oder höchstens 1 Mol-% oder höchstens 0,5 Mol%. Der Rest enthält insbesondere Oxide, die nicht in den hierin genannten Grundgläsern enthalten sind. Somit enthält der Rest insbesondere kein $SiO_2$, $Al_2O_3$, $B_2O_3$, MgO, CaO, $Na_2O$ oder $K_2O$.

Wenn es in dieser Beschreibung heißt, die Gläser seien frei von einer Komponente bzw. einer konstituierenden Phase oder enthalten eine gewisse Komponente bzw. konstituierende Phase nicht, so ist damit gemeint, dass diese Komponente bzw. konstituierende Phase allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 300 ppm (molar), bevorzugt weniger als 100 ppm (molar), besonders bevorzugt weniger als 50 ppm (molar) und am meisten bevorzugt weniger als 10 ppm (molar). Die Gläser dieser Erfindung sind insbesondere frei von Zink, Barium, Zirkon, Blei, Arsen, Antimon, und/oder Cadmium.

Kernglas und/oder Oberseiten-Oberflächenglas sind bevorzugt auch frei von Bismut. Das Unterseiten-Oberflächenglas kann hingegen insbesondere Zinn-Oxid und/oder Bismut-Oxid enthalten, bevorzugt in einem Anteil von insgesamt mindestens 300 ppm (molar), beispielsweise mindestens 350 ppm (molar), mindestens 400 ppm (molar), mindestens 450 ppm (molar), mindestens 500 ppm (molar), mindestens 600 ppm (molar), mindestens 700 ppm (molar), mindestens 800 ppm (molar), mindestens 900 ppm (molar), mindestens 0,1 Mol%, mindestens 0,2 Mol%, mindestens 0,3 Mol%, oder mindestens 0,4 Mol% enthalten. Bevorzugt enthält das Unterseiten-Oberflächenglas Zinn-Oxid und/oder Bismut-Oxid in einem Anteil von insgesamt höchstens 2,0 Mol%, höchstens 1,5 Mol%, höchstens 1,0 Mol%, höchstens 0,8 Mol%, oder höchstens 0,6 Mol%. Der Gesamtanteil von Zinn-Oxid und Bismut-Oxid im Unterseiten-Oberflächenglas kann beispielsweise in einem Bereich von 300 ppm (molar) bis 2,0 Mol%, von 350 ppm (molar) bis 2,0 Mol%, von 400 ppm (molar) bis 2,0 Mol%, von 450 ppm (molar) bis 1,5 Mol%, von 500 ppm (molar) bis 1,5 Mol%, von 600 ppm (molar) bis 1,0 Mol%, von 700 ppm (molar) bis 1,0 Mol%, von 800 ppm (molar) bis 1,0 Mol%, von 900 ppm (molar) bis 0,8 Mol%, von 0,1 Mol% bis 0,8 Mol%, von 0,2 Mol% bis 0,6 Mol%, von 0,3 Mol% bis 0,6 Mol%, oder von 0,4 Mol% bis 0,6 Mol% betragen.

Erfindungsgemäß ist die Summe der Anteile von Zinn-Oxid und Bismut-Oxid im Unterseiten-Oberflächenglas größer als die Summe der Anteile von Zinn-Oxid und Bismut-Oxid im Oberseiten-Oberflächenglas. Die Summe der Anteile von Zinn-Oxid und Bismut-Oxid im Unterseiten-Oberflächenglas kann die Summe der Anteile von Zinn-Oxid und Bismut-Oxid im Oberseiten-Oberflächenglas beispielsweise um mindestens 1 ppm (molar), mindestens 10 ppm (molar), mindestens 50 ppm (molar), mindestens 100 ppm (molar), mindestens 200 ppm (molar), mindestens 300 ppm (molar), mindestens 350 ppm (molar), mindestens 400 ppm (molar), mindestens 450 ppm (molar), mindestens 500 ppm (molar), mindestens 600 ppm (molar), mindestens 700 ppm (molar), mindestens 800 ppm (molar), mindestens 900 ppm (molar), mindestens 0,1 Mol%, mindestens 0,2 Mol%, mindestens 0,3 Mol%, oder mindestens 0,4 Mol% übersteigen. Die Summe der Anteile von Zinn-Oxid und Bismut-Oxid im Unterseiten-Oberflächenglas kann die Summe der Anteile von Zinn-Oxid und Bismut-Oxid im Oberseiten-Oberflächenglas beispielsweise um höchstens 2,0 Mol%, höchstens 1,5 Mol%, höchstens 1,0 Mol%, höchstens 0,8 Mol%, oder höchstens 0,6 Mol% übersteigen. Die Summe der Anteile von Zinn-Oxid und Bismut-Oxid im Unterseiten-Oberflächenglas kann beispielsweise um 300 ppm (molar) bis 2,0 Mol%, 350 ppm (molar) bis 2,0 Mol%, 400 ppm (molar) bis 2,0 Mol%, 450 ppm (molar) bis 1,5 Mol%, 500 ppm (molar) bis 1,5 Mol%, 600 ppm (molar) bis 1,0 Mol%, 700 ppm (molar) bis 1,0 Mol%, 800 ppm (molar) bis 1,0 Mol%, 900 ppm (molar) bis 0,8 Mol%, 0,1 Mol% bis 0,8 Mol%, 0,2 Mol% bis 0,6 Mol%, 0,3 Mol% bis 0,6 Mol%, oder 0,4 Mol% bis 0,6 Mol% größer sein als die Summe der Anteile von Zinn-Oxid und Bismut-Oxid im Oberseiten-Oberflächenglas. In einigen Ausführungsformen kann die Summe der Anteile von Zinn-Oxid und Bismut-Oxid im Unterseiten-Oberflächenglas um mindestens 50 ppm (molar), mindestens 100 ppm (molar), mindestens 150 ppm (molar), mindestens 200 ppm (molar), oder mindestens 250 ppm (molar) größer sein als die Summe der Anteile von Zinn-Oxid und Bismut-Oxid im Oberseiten-Oberflächenglas, beispielsweise um 50 ppm (molar) bis 2,0 Mol%, um 100 ppm (molar) bis 1,5 Mol%, um 150 ppm (molar) bis 1,0 Mol%, um 200 ppm (molar) bis 0,8 Mol%, oder um 250 ppm (molar) bis 0,6 Mol%.

Der Begriff "Zinn-Oxid" dient hierin als Sammelbegriff für die verschiedenen Oxide des Zinns, insbesondere für SnO, $SnO_2$ und $Sn_2O_3$. Der Anteil an Zinn-Oxid beschreibt insbesondere die Summe der Anteile von SnO, $SnO_2$

und $Sn_2O_3$. Gleichsam dient der Begriff "Bismut-Oxid" hierin als Sammelbegriff für die verschiedenen Oxide des Bismuts, insbesondere für $Bi_2O_3$ und $Bi_2O_5$. Der Anteil an Bismut-Oxid beschreibt insbesondere die Summe der Anteile von $Bi_2O_3$ und $Bi_2O_5$. Alle Formeln zur Berechnung der Eigenschaften sind so gestaltet, daß der Wert berechnet wird, der zu einem zu 100% aus den konstituierenden Phasen bestehenden Glas gehört. Für die Berechnungen der Eigenschaften aus der Phasenzusammensetzung ist es also unerheblich, ob ein Rest vorliegt oder nicht. Die Formeln sind so gestaltet, dass mit Rest und ohne Rest dasselbe Ergebnis erhalten wird. Bei größeren Resten werden die Berechnungen entsprechend ungenauer.

Herstellung

Die vorliegende Erfindung betrifft auch ein Verfahren zur Herstellung eines erfindungsgemäßen Glasartikels mit den Schritten

- Schmelzen der Glasrohstoffe,

- Formen eines Glasartikels, insbesondere einer Flachglasscheibe, aus der Glasschmelze

- Abkühlen des Glasartikels.

Das Verfahren umfasst bevorzugt eine Flachglasformgebung durch das Floatverfahren.

Das Glas wird insbesondere zuerst in einer Schmelzwanne erschmolzen und in einem Läuterteil blasenfrei "geläutert". In einem der Schmelzwanne nachfolgendem Kanal kann das flüssige Glas beispielsweise mittels Rührer homogenisiert und durch Einstellen definierter Glastemperaturen auf die zur Formgebung erforderliche Viskosität gebracht werden (Konditionieren).

Die Formgebung zu einem Flachglasband findet bevorzugt im Floatbad statt. Die konditionierte Glasschmelze kann insbesondere über einen Überlaufstein (Spout Lip) in das Floatbad fließen. Das erfindungsgemäße Floatverfahren unterscheidet sich insbesondere im Hinblick auf Temperaturführung und Verweilzeiten wesentlich von einem Standard-Floatverfahren wie es beispielsweise für die Herstellung von Kalk-Natron-Floatgläsern beschrieben ist.

Bei einem Floatverfahren wird ein endloses Glasband mit gewünschten Dimensionen in Breite und Dicke dadurch hergestellt, dass geschmolzenes Glas kontinuierlich auf die Oberfläche eines Bades aus geschmolzenem Metall gegeben wird. Auf der Oberfläche dieser Metallschmelze breitet sich das darauf schwimmende Glas aus. Als Metallschmelze wird bevorzugt eine Zinnschmelze verwendet. Die Temperaturen in und insbesondere über der Zinnschmelze weisen einen heißeren und einen kälteren Bereich auf, wobei die Glasschmelze im heißen Bereich aufgetragen und im kälteren Bereich langsam im verfestigtem Zustand abgehoben und ausgetragen wird. Das erfindungsgemäße Floatverfahren, das sich insbesondere für Borosilikatgläser eignet, wird insbesondere mit einem vergleichsweise geringen Mengendurchsatz von 20 - 100 t/Tag betrieben (typisch für Kalk-Natron Floatanlagen sind 500 - 1000 t/Tag).

Die gewünschte Glasdicke kann präzise eingestellt werden durch den Mengendurchsatz, die Glasbandbruttobreite und die Abzugsgeschwindigkeit. Die Glasbandbreite wird im der Schmelzwanne zugewandten Formgebungsteil des Floatbades beispielsweise mit Top-Roll-Maschinen eingestellt. Diese ziehen das Glas nach außen (für Glasdicken < 7 mm-Gleichgewichtsdicke) oder fördern das Glas nach innen (> 7 mm-Gleichgewichtsdicke). Für Glasdicken > 12 mm werden auch Graphitbarrieren verwendet, die ein Fließen des Glases im Floatbad nach außen verhindern. Das exakte Dickenprofil kann über die Glastemperaturen kontrolliert werden. Die Glastemperaturen werden insbesondere mit segmentierten SiC-Heizelementen eingestellt. Dabei wird bevorzugt nur die Oberfläche des Glasbandes im Floatbad aufgeheizt. Die Glastemperaturen (Ribbontemperaturen) werden beispielsweise mittels Strahlungspyrometern in Floatbadlängsachse gemessen. Ebenfalls können die Zinntemperaturen mittels Thermoelementen erfasst werden.

Infolge des Aufheizens der Glasoberfläche kann es bei Borosilikatgläsern zur Verdampfung von Glasbestandteilen (insbesondere Alkaliborate und/oder Dioxoborsäure) in die Umgebungsatmosphäre kommen. Diese Verdampfungsprodukte können mit der Formiergasatmosphäre kontinuierlich abgesaugt (Venting Out), um eine Kondensation dieser Verdampfungsprodukte im kalten Floatbadbereich (EXIT END) zu vermeiden.

Die Art und das Ausmaß der Verdampfung lassen sich insbesondere über die Temperaturführung und/oder die Verweilzeiten bei bestimmten Temperaturen gezielt einstellen. Auch über die Zusammensetzung der Formiergasatmosphäre kann die Abdampfung beeinflusst werden. Die Abdampfung wiederum bestimmt wesentlich die Veränderung der Zusammensetzung des Oberseiten-Oberflächenglases, aus der sich wiederum der CTE-Unterschied zwischen Oberseiten-Oberflächenglas und Kernglas ergibt, der seinerseits für die gewünschte Druckvorspannung an der Oberseiten-Oberfläche benötigt wird.

Zur Vermeidung einer Oxidation des flüssigen Zinns wird das Floatbad bevorzugt unter einer reduzierenden Schutzgasatmosphäre, vorzugsweise einem Formiergasgemisch aus $N_2$ und $H_2$ betrieben. Dabei kann im Floatbad insbesondere ein geringer Überdruck (beispielsweise etwa 0,3 mbar) herrschen, um das Eindringen von Luftsauerstoff zu vermeiden bzw. zu minimieren. Der Sauerstoffpartialdruck (pO$_2$) kann an mehreren Stellen im Floatbad kontinuierlich gemessen werden. Dringt Luft in das Floatbad ein oder gelangt O$_2$ aus der Glasschmelze in die Floatbadatmosphäre, so reagiert O$_2$ mit H$_2$ zu Wasserdampf.

Die Herstellung erfolgt durch eine gezielte Ausnutzung der unterschiedlichen Tendenz der verschiedenen Glasbestandteile, insbesondere von Bor und Alkalis, von offenen heißen Glasoberflächen abzudampfen. Durch die gezielte Einstellung verschiedener Verfahrensparameter lässt sich die Abdampfung auf das gewünschte Maß einstellen. Ein gewisses Maß an Abdampfung ist vorteilhaft zur Erreichung einer vorteilhaften Druckvorspannung an der Oberseiten-Oberfläche. Andererseits kann es auch vorteilhaft sein, die Abdampfung zu begrenzen, insbesondere um die Neigung zu brüchigem Verhalten oder Abplatzungen zu verringern, die unter Umständen mit einer besonders hohen Abdampfung einhergehen kann.

Die Glastemperatur (Ribbontemperatur) liegt im Abschnitt des auffließenden Glases bevorzugt zwischen VA und VA+0.2(VA-T$_G$).

Die Glastemperatur beträgt im Abschnitt des auffließenden Glases bevorzugt mindestens VA. Dies ist vorteilhaft für das Auffließverhalten des Glases. Weiter bevorzugt beträgt die Glastemperatur im Abschnitt des auffließenden Glases mindestens VA+10°C, weiter bevorzugt mindestens VA+20°C, beispielsweise mindestens VA+30°C, mindestens VA+40°C, mindestens VA+50°C, mindestens VA+60°C, mindestens VA+70°C, mindestens VA+80°C, mindestens VA+90°C, oder mindestens VA+100°C. Dadurch, dass die Glastemperatur im Abschnitt des auffließenden Glases höher gewählt wird als VA, lässt sich das Ausmaß der gewünschten Abdampfung erhöhen. Gemeint sind jeweils die aus der Zusammensetzung des Kernglases berechneten Werte für VA (hierin auch als VA$_K$ bezeichnet).

Die Glastemperatur beträgt im Abschnitt des auffließenden Glases jedoch bevorzugt höchstens VA+0.2(VA-T$_G$). Die Glastemperatur beträgt im Abschnitt des auffließenden Glases bevorzugt höchstens VA+140°C, höchstens VA+130°C, höchstens VA+120°C, oder höchstens VA+110°C. Eine Begrenzung der Auffließtgemperatur ist vorteilhaft, um die Abdampfung auf ein gewünschtes Maß zu reduzieren und so die gewünschte Druckvorspannung an der Oberseiten-Oberfläche gezielt einzustellen. Gemeint sind jeweils die aus der Zusammensetzung des Kernglases berechneten Werte für VA (hierin auch als VA$_K$ bezeichnet).

Die Glastemperatur kann im Abschnitt des auffließenden Glases insbesondere in einem Bereich von VA+10°C bis VA+140°C liegen, insbesondere in einem Bereich von VA+20°C bis VA+140°C, von VA+30°C bis VA+140°C, von VA+40°C bis VA+130°C, von VA+50°C bis VA+130°C, von VA+60°C bis VA+120°C, von VA+70°C bis VA+120°C, von VA+80°C bis VA+110°C, von VA+90°C bis VA+110°C, oder von VA+100°C bis VA+110°C. Gemeint sind jeweils die aus der Zusammensetzung des Kernglases berechneten Werte für VA (hierin auch als VA$_K$ bezeichnet). Um die gewünschte Abdampfrate zu erreichen ist eine Temperatur von VA bis VA+6,5mm/d*100°C, bevorzugt VA+6,5mm/d*2°C bis VA+6,5mm/d*80°C, bevorzugt VA+6,5mm/d*5°C bis VA+6,5mm/d*50°C, bevorzugt VA+6,5mm/d*8°C bis VA+6,5mm/d*30°C, bevorzugt VA+6,5mm/d*10°C bis VA+6,5mm/d*15°C, wobei d die Dicke des (erkalteten) Glasartikels in mm ist, besonders bevorzugt.

Die Glastemperatur liegt im EXIT END-Bereich des Floatbades bevorzugt zwischen T$_G$ und T$_G$+0.2(VA-T$_G$). Gemeint sind jeweils die aus der Zusammensetzung des Kernglases berechneten Werte für VA (hierin auch als VA$_K$ bezeichnet) und T$_G$.

Der obere Kühlpunkt T$_G$ wird nach Formel (37) aus der Zusammensetzung des Kernglases in konstituierenden Phasen berechnet und der Verarbeitungspunkt VA wird nach Formel (35) aus der Zusammensetzung des Kernglases in konstituierenden Phasen berechnet.

Die Verweilzeit, die das Glas im Formgebungsbereich des Floatbades (Viskosität im Bereich 10$^3$ dPas bis 10$^8$ dPas) hat, liegt zur Erreichung des Abdampfungszieles bevorzugt in einem Bereich von 5 bis 60 Minuten beispielsweise von 10 bis 50 Minuten, von 15 bis 40 Minuten, oder von 20 bis 30 Minuten.

Von dieser Verweilzeit und der Temperatur hängen insbesondere die Abdampfraten von Alkaliboraten aus der Glasoberfläche im Floatbad ab, im Wesentlichen von der Temperatur und der Verweilzeit des Glases in der Abdampfzone. Die Verweilzeit bei einem konstanten Glasdurchsatz (Pull Rate) wird durch die zu fertigende Glasdicke bestimmt.

Die Abdampfraten können bei gegebener Verweilzeit über die Glastemperaturen eingestellt. Es ist auch möglich, die Verweilzeit bei gegebener Dicke anzupassen, indem der Glasdurchsatz entsprechend angepasst wird.

Die Verweilzeit, die das Glas im Formgebungsbereich des Floatbades (Viskosität im Bereich 10$^3$ dPas bis 10$^8$ dPas) hat, beträgt bevorzugt mindestens 5 Minuten, mindestens 10 Minuten, mindestens 15 Minuten, oder mindestens 20 Minuten. Mindestens 10 Minuten, mindestens 15 Minuten, oder mindestens 20 Minuten ist besonders vorteilhaft, um das Ausmaß der Abdampfung weiter zu erhöhen. Die Verweilzeit, die das Glas im Formgebungsbereich des Floatbades (Viskosität im Bereich 10$^3$ dPas bis 10$^8$ dPas) hat, beträgt bevorzugt höchstens 60 Minuten, höchstens 50 Minuten, höchstens 40 Minuten, oder höchstens 30 Minuten. Dies ist vorteilhaft, um die Abdampfung auf das gewünschte Maß zu reduzieren.

Das Abdampfverhalten kann optional mit Hilfe eines oder mehrerer weiterer Einflussfaktoren beeinflusst werden: Die Glasschmelze soll bevorzugt 30 - 60 mmol, beispielsweise 40 bis 50 mmol Wasser pro Liter Glas gelöst enthalten. Der Wassergehalt kann zum Beispiel, bevorzugt in dem erkalteten Kernglas, gemäß "David Pearson, A., Pasteur, G.A.

& Northover, W.R. Determination of the absorptivity of OH in a sodium borosilicate glass. J Mater Sci 14, 869-872 (1979). https://doi.org/10.1007/BF00550718" ermittelt werden. Dazu kann das Glas zumindest an seiner Oberfläche in der Schmelzwanne in einer Atmosphäre geschmolzen werden, die gasförmiges Wasser enthält. Die wasserhaltige Atmosphäre kann insbesondere durch Verbrennen von fossilen Energieträgern oder Wasserstoff mit reinem Sauerstoff erzeugt. Dadurch lässt sich insbesondere das Ausmaß der Abdampfung von Borsäure optimieren. Wasser kann Borsäure aus dem Glas lösen und zu deren Abdampfung beitragen. Daher enthält die Glasschmelze bevorzugt mindestens 30 mmol oder mindestens 40 mmol Wasser pro Liter Glas gelöst. Um das Ausmaß der Abdampfung zu begrenzen, kann es vorteilhaft sein, wenn die Glasschmelze höchstens 60 mmol oder höchstens 50 mmol Wasser pro Liter Glas gelöst enthält.

Auch über die Formiergasmenge (insbesondere Zuflussmenge und Absaugmenge) lässt sich das Ausmaß der Abdampfung beeinflussen. Der Floatbaddruck kann vorteilhafterweise zwischen 0,05 und 0,3 mbar beispielsweise zwischen 0,1 und 0,2 mbar eingestellt werden, insbesondere durch Variation der Formiergasmenge und Absaugleistung (Venting out). Der Floatbaddruck kann beispielsweise mindestens 0,05 mbar oder mindestens 0,1 mbar betragen. Der Floatbaddruck kann beispielsweise höchstens 0,3 mbar oder höchstens 0,2 mbar betragen.

Vorteilhaft ist es auch, wenn der Wasserstoffgehalt in der Formiergasatmosphäre zwischen 2 und 15 Vol-%, beispielsweise zwischen 5 und 10 Vol-% liegt. Beispielsweise beträgt der Wasserstoffgehalt in der Formiergasatmosphäre mindestens 2 Vol-% oder mindestens 5 Vol-%. Beispielsweise beträgt der Wasserstoffgehalt in der Formiergasatmosphäre höchstens 15 Vol-% oder höchstens 10 Vol-%.

Begrenzend für das Abdampfen könnte auch eine Sättigung der Atmosphäre mit den abdampfenden Substanzen sein. Hierüber eine Begrenzung der Abdampfung erreichen zu wollen, ist jedoch problematisch. Denn eine Sättigung wird nie erreicht, da die Floatbadatmosphäre kontinuierlich ausgetauscht wird und somit auch die Abdampfprodukte kontinuierlich entfernt werden.

Erfindungsgemäß werden die Prozeßparameter so gewählt, daß sich die gewünschte Produkteigenschaft bezüglich Oberflächenverdampfung ergibt. Verschiedene Glasdicken können dabei verschiedene Einstellungen erfordern. Wird beispielsweise bei Ultradünngläsern mit einer Glasdicke von 1mm oder weniger die für die Oberflächenverdampfung bevorzugte Verweilzeit von mindestens 5 min unterschritten, kann der Floatbaddurchsatz (Pull Rate) verringert werden, um die Verweilzeit entsprechend zu erhöhen.

Für verschiedene Glasdicken können wiederum verschiedene Verweilzeiten auch im Hinblick auf das Ausmaß der Abdampfung vorteilhaft sein. Besonders vorteilhaft ist eine Verweilzeit von 1 bis 10 Minuten pro mm Glasdicke, insbesondere von 2 bis 8 Minuten pro mm Glasdicke oder von 3 bis 5 Minuten pro mm Glasdicke. Bevorzugt beträgt die Verweilzeit mindestens 1 Minute pro mm Glasdicke, mindestens 2 Minuten pro mm Glasdicke, oder mindestens 3 Minuten pro mm Glasdicke. Bevorzugt beträgt die Verweilzeit höchstens 10 Minuten pro mm Glasdicke, höchstens 8 Minuten pro mm Glasdicke, oder höchstens 5 Minuten pro mm Glasdicke. Gemeint sind die Glasdicke des fertigen (erkalteten) Glasartikels und die Verweilzeit, die das Glas im Formgebungsbereich des Floatbades (Viskosität im Bereich $10^3$ dPas bis $10^8$ dPas) hat.

Alle relevanten Prozessparameter für die Formgebung können in sogenannten "Settings" dokumentiert werden. Damit kann sichergestellt werden, dass neben den geometrischen Zielparametern wie Glasdicke, Keiligkeit, Warp und Waviness auch der gewünschte Effekt speziell bezüglich der Abdampfung erreicht wird.

Verwendungen

Die Erfindung betrifft auch die Verwendung eines Glasartikels, insbesondere in einem Kochgerät, bevorzugt Induktionskochgerät, als Brandschutztür, als Kaminsichtscheibe, oder als Fenster.

Beispiele

Im Folgenden werden bevorzugte Ausführungsformen der Erfindung und Herstellung näher beschrieben.

Die im folgenden aufgeführten Beispiele sind sowohl als bulk-Material als auch an der Oberfläche chemisch analysiert worden. Die Oberflächenanalyse ist dabei per TOF-SIMS erfolgt; im Hinblick auf das Ziel, mindestens Risse der Tiefe 1 - 10nm zusammendrücken zu können, wird als Oberflächenwert jeweils der Mittelwert der oberflächennahen Messungen bis zu einer Tiefe < 20nm herangezogen. Das trägt auch dem unvermeidbaren Rauschen dieser Methode Rechnung. Es wurden jeweils 3 ungefähr äquidistante Einzelmessungen bei ca. 9nm, ca. 14nm und ca. 19nm Tiefe durchgeführt.

Die TOF-SIMS Signalstärken (für Si, B, Na, usw.) waren ab ca. 250nm Tiefe konstant. Diesen Signalstärken wurde eine Konzentration in % zugeordnet und zwar genau die, die aus der normalen chemischen Analyse erhalten wurden. Diese Werte wurden zur Oberfläche hin fortgeschrieben. Die so ermittelten Oberflächenkonzentrationen wurden anschließend normiert, so dass deren Summe 100% betrug.

**Beispiel 1**

Beispiel 1 ist ein Borosilicatglas, das als Flachglas der Dicke 6,5 mm im Floatverfahren hergestellt worden ist. Die Schmelzwanne wird mit Oxyfuel beheizt und hat einen Wannendurchsatz von 53 t/d. Von der Schmelzwanne führt ein Speiserkanal bis zur "Spout Lip". Dieser Kanal ist abgedeckt, so dass dort kein Alkaliborat verdampfen kann.

Über die "Spout Lip" fließt das heiße Glas zunächst unter einem Sperrschieber (TWEEL) mit einer Einlauftemperatur von 1350°C in den Floatbadbereich auf die heiße Zinnoberfläche. Diese Position wird als "Bay 0" bezeichnet; diese Bezeichnung rührt von der Aufteilung des Floatbades in als "Bay" bezeichnete Zonen her. Im vorliegenden Beispiel beträgt die Zahl der Bays "8"; jede dieser Zonen hat eine Länge von 3m.

Der Durchsatz des Floatbades beträgt ca. 50 t/d.

In Bay 1 spreitet die Glasschmelze unter der Wirkung der Schwerkraft auf und fließt auf eine Breite von ca. 1,50 m aus. In der Folge spreitet das Glasband weiter auf die Zielbreite 2,8 m auf.

Für eine gute Abdampfung der Alkaliborate aus der Glasoberfläche sind möglichst hohe Temperaturen von Vorteil. Bay 1 wird deshalb mit ca. 50 - 150 KW Heizleistung (Top) beaufschlagt. Die Glasoberflächentemperatur beträgt 1200 -1300 °C.

In Bay 2 - Bay 4 findet die Formgebung auf die gewünschte Glasbanddicke mittels Toprollmaschinen statt. Vorteilhafte Heizleistungen und Glasoberflächentemperature sind in der Formgebungszone:

- Bay 2: 100 - 200 KW und 1050 - 1150°C
- Bay 3: 200 - 300 KW und 1000 - 1100°C
- Bay 4: 50 - 100 KW und 950 - 1050°C

Die Bays 1 - 4 bilden die Abdampfzone.

In den Bays 5 - 8 wird das Glasband nur noch abgekühlt und wird bei einer EXIT-Temperatur von 650 - 700°C abgehoben und aus dem Floatbad in den Rollenkühlofen (Lehr) transportiert.

Die Heizleistungen betragen in den Bays 5 - 8 ca. 50 - 150 KW. Eine Abdampfung von Alkaliboraten findet in diesen Zonen nicht mehr statt.

Die Zusammensetzung ist an beiden Seiten per TOF-SIMS bestimmt worden. Die Zusammensetzungswerte im Kern sind gleich den Ergebnissen einer chemischen Analyse gesetzt worden, um so die TOF-SIMS-Meßwerte zu normieren. Für den Kern ergibt sich die folgende Zusammensetzung in konstituierenden Phasen (gerundet):

| Konstituierende Phase | Mol% (normiert) |
| --- | --- |
| Reedmergnerit $(Na_2O \cdot B_2O_3 \cdot 6SiO_2)/8$ | 17,8 |
| Kalium-Reedmergnerit $(K_2O \cdot B_2O_3 \cdot 6SiO_2)/8$ | 3,0 |
| Albit $(Na_2O \cdot Al_2O_3 \cdot 6SiO_2)/8$ | 11,4 |
| Boroxid $B_2O_3$ | 9,1 |
| Siliziumdioxid $SiO_2$ | 58,7 |

Nach den Gleichungen (13, 14, 29, 31, 35, 37) errechnen sich für den Kern die folgenden Eigenschaftswerte (gerundet):

| Eigenschaft | Kern |
| --- | --- |
| CTE | 3,3 ppm/K |
| $E/(1-\mu)$ | 84.7 GPa |
| $T_G$ | 584°C |
| VA | 1294°C |

Nach den Gleichungen (14, 15, 16) errechnen sich für die Oberseite die folgenden Eigenschaftswerte (gerundet):

| Eigenschaft | Oberseite |
| --- | --- |
| CTE | 1,9 ppm/K |

Setzt man in (10) für $E/(1-\mu)$ und $T_G$ die Werte des Kernmaterials ein und für $\Delta$CTE die Differenz der hier für Kern und Oberseite gewonnenen Werte, so ergibt sich als Wert für die Druckvorspannung an der Oberseite:

|  | Oberseite |
|---|---|
| $\sigma_O$ | 68 MPa |

**Beispiel 2**

Beispiel 2 ist ein Borosilicatglas, das als Flachglas der Dicke 6mm im Floatverfahren hergestellt worden ist und dessen Zusammensetzung an beiden Seiten per TOF-SIMS bestimmt worden ist. Die Zusammensetzungswerte im Kern sind gleich den Ergebnissen einer chemischen Analyse gesetzt worden, um so die TOF-SIMS-Meßwerte zu normieren. Für den Kern ergibt sich die folgende Zusammensetzung in konstituierenden Phasen (gerundet):

| Konstituierende Phase | Mol% (normiert) |
|---|---|
| Reedmergnerit $(Na_2O \cdot B_2O_3 \cdot 6SiO_2)/8$ | 25,4 |
| Kalium-Reedmergnerit $(K_2O \cdot B_2O_3 \cdot 6SiO_2)/8$ | 4,2 |
| Albit $(Na_2O \cdot Al_2O_3 \cdot 6SiO_2)/8$ | 11,6 |
| Anorthit $(CaO \cdot Al_2O_3 \cdot 2SiO_2)/4$ | 4,4 |
| Boroxid $B_2O_3$ | 5,7 |
| Siliziumdioxid $SiO_2$ | 48,7 |

Nach den Gleichungen (13, 14, 29, 31, 35, 37) errechnen sich für den Kern die folgenden Eigenschaftswerte (gerundet):

| Eigenschaft | Kern |
|---|---|
| CTE | 3.8 ppm/K |
| $E/(1-\mu)$ | 89.1 GPa |
| $T_G$ | 599°C |
| VA | 1264°C |

Nach den Gleichungen (14, 15, 16) errechnen sich für die Oberseite die folgenden Eigenschaftswerte (gerundet):

| Eigenschaft | Oberseite |
|---|---|
| CTE | 1.8 ppm/K |

Setzt man in (10) für $E/(1-\mu)$ und $T_G$ die Werte des Kernmaterials ein und für $\Delta$CTE die Differenz der hier für Kern und Oberseite gewonnenen Werte, so ergibt sich als Wert für die Druckvorspannung an der Oberseite:

|  | Oberseite |
|---|---|
| $\sigma_O$ | 106 MPa |

**Beispiel 3**

Beispiel 3 ist ein Borosilicatglas, das als Flachglas der Dicke 6mm im Floatverfahren hergestellt worden ist und dessen Zusammensetzung an beiden Seiten per TOF-SIMS bestimmt worden ist. Die Zusammensetzungswerte im Kern sind gleich den Ergebnissen einer chemischen Analyse gesetzt worden, um so die TOF-SIMS-Meßwerte zu normieren. Für den Kern ergibt sich die folgende Zusammensetzung in konstituierenden Phasen (gerundet):

| Konstituierende Phase | Mol% (normiert) |
|---|---|
| Reedmergnerit ($Na_2O \cdot B_2O_3 \cdot 6SiO_2$)/8 | 23,0 |
| Kalium-Reedmergnerit ($K_2O \cdot B_2O_3 \cdot 6SiO_2$)/8 | 12,6 |
| Cordierit ($2MgO \cdot 2Al_2O_3 \cdot 5SiO_2$)/9 | 3,5 |
| Anorthit ($CaO \cdot Al_2O_3 \cdot 2SiO_2$)/4 | 3,1 |
| Diopsid ($MgO \cdot CaO \cdot 2SiO_2$)/4 | 7,5 |
| Boroxid $B_2O_3$ | 4,3 |
| Siliziumdioxid $SiO_2$ | 46,0 |

Nach den Gleichungen (13, 14, 29, 31, 35, 37) errechnen sich für den Kern die folgenden Eigenschaftswerte (gerundet):

| Eigenschaft | Kern |
|---|---|
| CTE | 4,0 ppm/K |
| $E/(1-\mu)$ | 92,4 GPa |
| $T_G$ | 612°C |
| VA | 1255°C |

Nach den Gleichungen (14, 15, 16) errechnen sich für die Oberseite die folgenden Eigenschaftswerte (gerundet):

| Eigenschaft | Oberseite |
|---|---|
| CTE | 2,2 ppm/K |

Setzt man in (10) für $E/(1-\mu)$ und $T_G$ die Werte des Kernmaterials ein und für $\Delta$CTE die Differenz der hier für Kern und Oberseite gewonnenen Werte, so ergibt sich als Wert für die Druckvorspannungen an der Oberseite:

| | Oberseite |
|---|---|
| $\sigma_O$ | 95,4 MPa |

**Patentansprüche**

1.  Glasartikel, insbesondere Borosilikatglasartikel, umfassend drei Abschnitte:

    - ein Oberseiten-Oberflächenglas,
    - ein Kernglas, und
    - ein Unterseiten-Oberflächenglas,

      • wobei das Oberseiten-Oberflächenglas und das Unterseiten-Oberflächenglas jeweils bis zu einer Tiefe von < 20 nm vorliegen und das Kernglas jedenfalls in 500 nm Tiefe vorliegt,
      • wobei die Summe der Anteile von Zinn-Oxid und Bismut-Oxid im Unterseiten-Oberflächenglas größer ist als die Summe der Anteile von Zinn-Oxid und Bismut-Oxid im Oberseiten-Oberflächenglas,
      • wobei das Kernglas einen nach den Formeln (13, 14) berechneten $CTE_K$ in einem Bereich von 2,5 bis 5,0 ppm/K aufweist,
      • wobei das Oberseiten-Oberflächenglas einen nach den Formeln (14, 15, 16) berechneten $CTE_O$ aufweist, der im Vergleich zu dem nach den Formeln (13, 14) berechneten $CTE_K$ des Kernglases um mindestens 0,6 ppm/K geringer ist, und
      • wobei sich nach Formel (10) eine Druckvorspannung $\sigma_O$ an der Oberseiten-Oberfläche von mindestens 50 MPa ergibt, wenn für $E/(1-\mu)$ und $T_G$ die nach den Formeln (31), (29) und (37) berechneten Werte des Kernglases und für $\Delta CTE$ die Differenz $CTE_K$-$CTE_O$ der für Kernglas und Oberseiten-Oberflächenglas berechneten CTE-Werte eingesetzt werden.

2. Glasartikel nach Anspruch 1, wobei das Kernglas eine Zusammensetzung aufweist, die durch ein System konstituierender Phasen gekennzeichnet ist, das die konstituierende Phase Reedmergnerit in einem Anteil von 10 bis 50 Mol%, die konstituierende Phase Kalium-Reedmergnerit in einem Anteil von 0 bis 30 Mol%, die konstituierende Phase Anorthit in einem Anteil von 0 bis 20 Mol%, die konstituierende Phase Dibortrioxid in einem Anteil von 0 bis 20 Mol%, und die konstituierende Phase Siliziumdioxid in einem Anteil von 20 bis 75 Mol% umfasst.

3. Glasartikel nach Anspruch 1 oder 2, wobei die Zusammensetzung des Kernglases **gekennzeichnet ist durch** folgende konstituierende Phasen:

| konstituierende Phase | Min (Mol%) | Max (Mol%) |
|---|---|---|
| Reedmergnerit | 10 | 50 |
| Kalium-Reedmergnerit | 0 | 30 |
| Cordierit | 0 | 20 |
| Anorthit | 0 | 20 |
| Diopsid | 0 | 20 |
| Dibortrioxid | 0 | 20 |
| Siliziumdioxid | 20 | 75 |

4. Glasartikel nach Anspruch 1 oder 2, wobei die Zusammensetzung des Kernglases **gekennzeichnet ist durch** folgende konstituierende Phasen:

| konstituierende Phase | Min (Mol%) | Max (Mol%) |
|---|---|---|
| Reedmergnerit | 10 | 50 |
| Kalium-Reedmergnerit | 0 | 30 |
| Albit | 0 | 50 |
| Anorthit | 0 | 20 |
| Dibortrioxid | 0 | 20 |
| Siliziumdioxid | 20 | 75 |

5. Glasartikel nach mindestens einem der vorhergehenden Ansprüche, wobei das Verhältnis des Anteils der konstituierenden Phase Siliziumdioxid im Oberseiten-Oberflächenglas zum Anteil der konstituierenden Phase Siliziumdioxid im Kernglas in einem Bereich von 1,1:1 bis 2,0:1 liegt.

6. Glasartikel nach mindestens einem der vorhergehenden Ansprüche, wobei

der Anteil der konstituierenden Phase Siliziumdioxid im Oberseiten-Oberflächenglas mindestens 50 Mol% beträgt,
der Anteil der konstituierenden Phase Anorthit im Oberseiten-Oberflächenglas höchstens 5 Mol% beträgt, und/oder
der Anteil der konstituierenden Phase Reedmergnerit im Oberseiten-Oberflächenglas höchstens 10 Mol% beträgt.

7. Glasartikel nach mindestens einem der vorhergehenden Ansprüche, wobei der nach den Formeln (14, 15, 16) berechnete $CTE_O$ des Oberseiten-Oberflächenglases 1,2 bis 3,0 ppm/K beträgt.

**8.** Glasartikel nach mindestens einem der vorhergehenden Ansprüche, wobei der nach Formel (35) aus der Zusammensetzung des Kernglases in konstituierenden Phasen berechnete Verarbeitungspunkt $VA_K$ in einem Bereich von 1200°C bis 1350°C liegt.

**9.** Glasartikel nach mindestens einem der vorhergehenden Ansprüche, wobei der mit Hilfe der Formeln (31) und (29) aus der Zusammensetzung des Kernglases berechnete Quotient aus dem elastischen Modul und der Größe (1-$\mu$) in einem Bereich von 80 GPa bis 100 GPa liegt.

**10.** Glasartikel nach mindestens einem der vorhergehenden Ansprüche, wobei die Dicke des Glasartikels in einem Bereich von 0,1 bis 30 mm liegt.

**11.** Verfahren zur Herstellung eines Glasartikels nach mindestens einem der vorhergehenden Ansprüche, mit den Schritten

- Schmelzen der Glasrohstoffe, insbesondere in einer Schmelzwanne,
- Formen eines Glasartikels, insbesondere einer Flachglasscheibe, aus der Glasschmelze
- Abkühlen des Glasartikels.

**12.** Verfahren nach Anspruch 11, wobei die Glasschmelze 30 bis 60 mmol Wasser pro Liter Glas gelöst enthält.

**13.** Verfahren nach mindestens einem der Ansprüche 11 und 12, wobei das Verfahren eine Flachglasformgebung durch das Floatverfahren umfasst, bei dem die Glasschmelze auf die Oberfläche eines Floatbades aus geschmolzenem Metall, bevorzugt Zinn und/oder Bismut, gegeben wird, insbesondere durch Auffließen auf die Oberfläche des Floatbades.

**14.** Verfahren nach Anspruch 13, wobei die Verweilzeit, die das Glas im Formgebungsbereich des Floatbades bei einer Viskosität im Bereich $10^3$ dPas bis $10^8$ dPas hat, in einem Bereich von 5 bis 60 Minuten liegt, wobei insbesondere die Verweilzeit in einem Bereich von 1 bis 10 Minuten pro mm Dicke des Glasartikels liegt.

**15.** Verfahren nach mindestens einem der Ansprüche 13 bis 14, wobei die Glastemperatur (Ribbontemperatur) im Abschnitt des auffließenden Glases insbesondere in einem Bereich von $VA_K$+10°C bis $VA_K$+140°C liegt.

**16.** Verfahren nach mindestens einem der Ansprüche 13 bis 15, wobei das Floatbad unter einer reduzierenden Schutzgasatmosphäre, vorzugsweise einem Formiergasgemisch aus $N_2$ und $H_2$ betrieben wird, insbesondere wobei der Floatbaddruck zwischen 0,05 und 0,3 mbar liegt und/oder der Wasserstoffgehalt in der Formiergasatmosphäre zwischen 2 und 15 Vol-% liegt.

**17.** Verwendung eines Glasartikels nach mindestens einem der Ansprüche 1 bis 10 in einem Kochgerät, bevorzugt Induktionskochgerät, als Brandschutztür, als Kaminsichtscheibe, oder als Fenster.

Europäisches
Patentamt

European
Patent Office

Office européen
des brevets

## EUROPÄISCHER RECHERCHENBERICHT

**Nummer der Anmeldung**

**EP 22 17 9158**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2016/176751 A1 (LAUTENSCHLAEGER GERHARD [DE] ET AL) 23. Juni 2016 (2016-06-23) | 1-13,17 | INV. C03C1/00 |
| A | * Tabelle;<br>Spalten 22-23; Beispiele 2,5,Schott Boro 33, 10, 12, 14 *<br>* Spalte 22, Zeilen 39-40 *<br>* Spalte 19, Zeilen 18-23 *<br>----- | 14-16 | C03B1/00<br>C03C3/091 |
| X | EP 1 314 704 A1 (SCHOTT GLAS [DE]; ZEISS STIFTUNG [DE]) 28. Mai 2003 (2003-05-28) | 1-13,17 | |
| A | * Vergleichsbeispiele 2-6, Beispiele 1-7; Tabellen 1,2 *<br>* Anspruch 6 *<br>* Absatz [0034] *<br>----- | 14-16 | |
| A | US 3 843 346 A (EDGE C ET AL) 22. Oktober 1974 (1974-10-22)<br>* Anspruch 1 *<br>----- | 1-17 | |

**RECHERCHIERTE SACHGEBIETE (IPC)**

C03C
C03B

Der vorliegende Recherchenbericht wurde für alle Patentansprüche erstellt

| Recherchenort | Abschlußdatum der Recherche | Prüfer |
|---|---|---|
| München | 28. Oktober 2022 | Saldamli, Saltuk |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

# EP 4 105 186 A1

## ANHANG ZUM EUROPÄISCHEN RECHERCHENBERICHT
## ÜBER DIE EUROPÄISCHE PATENTANMELDUNG NR.

EP 22 17 9158

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2022

| Im Recherchenbericht angeführtes Patentdokument | Datum der Veröffentlichung | Mitglied(er) der Patentfamilie | Datum der Veröffentlichung |
|---|---|---|---|
| US 2016176751 A1 | 23-06-2016 | CN 105712623 A | 29-06-2016 |
| | | DE 102014119594 A1 | 23-06-2016 |
| | | FR 3030488 A1 | 24-06-2016 |
| | | JP 6725984 B2 | 22-07-2020 |
| | | JP 2016147796 A | 18-08-2016 |
| | | US 2016176751 A1 | 23-06-2016 |
| EP 1314704 A1 | 28-05-2003 | AT 264819 T | 15-05-2004 |
| | | DE 10150884 A1 | 08-05-2003 |
| | | DK 1314704 T3 | 02-08-2004 |
| | | EP 1314704 A1 | 28-05-2003 |
| | | ES 2219618 T3 | 01-12-2004 |
| | | PT 1314704 E | 31-08-2004 |
| US 3843346 A | 22-10-1974 | AR 200911 A1 | 27-12-1974 |
| | | AU 6532374 A | 07-08-1975 |
| | | BE 811088 A | 16-08-1974 |
| | | CA 1035955 A | 08-08-1978 |
| | | CS 174233 B2 | 31-03-1977 |
| | | DE 2408867 A1 | 19-09-1974 |
| | | DK 150648 B | 11-05-1987 |
| | | ES 423917 A1 | 01-06-1976 |
| | | ES 423918 A1 | 16-10-1976 |
| | | ES 446052 A1 | 01-06-1977 |
| | | FR 2220485 A1 | 04-10-1974 |
| | | GB 1469283 A | 06-04-1977 |
| | | GB 1469285 A | 06-04-1977 |
| | | IE 39156 B1 | 16-08-1978 |
| | | IN 141332 B | 12-02-1977 |
| | | IT 1009209 B | 10-12-1976 |
| | | JP S593408 B2 | 24-01-1984 |
| | | JP S5029624 A | 25-03-1975 |
| | | NL 7402307 A | 10-09-1974 |
| | | NZ 173324 A | 28-04-1978 |
| | | SE 408789 B | 09-07-1979 |
| | | SU 923362 A3 | 23-04-1982 |
| | | US 3843346 A | 22-10-1974 |
| | | ZA 74732 B | 24-09-1975 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014119594 A1

**In der Beschreibung aufgeführte Nicht-Patentliteratur**

- **ARUN K. VARSHNEYA.** Chemical Strengthening of Glass: Lessons Learned and Yet To Be Learned. *International Journal of Applied Glass Science,* 2010, vol. 1 (2), 131-142
- **WERNER KIEFER.** Thermisches Vorspannen von Gläsern niedriger Wärmeausdehnung. *Glastechnische Berichte,* 1984, vol. 57 (9), 221-228
- Thermal loads on optical glass. Technical Information Exchange No. 32 (TIE-32). Schott AG, Oktober 2018
- **CONRADT R.** Chemical structure, medium range order, and crystalline reference state of multicomponent oxide liquids and glasses. *Journal of Non-Crystalline Solids,* 15. Oktober 2004, vol. 345-346, 16-23
- **FRANZ SIMON.** Über den Zustand der unterkühlten Flüssigkeiten und Gläser. *Zeitschrift für anorganische und allgemeine Chemie,* 1931, vol. 203 (1), 219-227
- **SCHOTT.** *Technical Glasses, Physical and Technical Properties, Mainz,* 2014, https://www.us.schott.com/d/epackaging/0ad24277-2ace-4d9a-999d-736ed389f6cc/1.3/18.11.15_final_schott_technical_glasses_us.pdf
- Glasbau. **B. WELLER ; S. TASCHE.** Wendehorst Bautechnische Zahlentafeln. 2007
- Werkstoffe des Bauwesens / Glas. **K.-CH. THIENEL.** Scriptum zur Vorlesung. Institut für Werkstoffe des Bauwesens, Fakultät für Bauingenieur- und Vermessungswesen, Universität der Bundeswehr München, 2018
- **R.E. MOULD ; HERAUSGEBER L.J. BONIS ; J.J. DUGA ; J.J. GILMAN.** The Strength of Inorganic Glasses. *Fundamental Phenomena in the Materials Sciences,* 1967, 119-149
- Strength of Glass and Glass Fiber. **HONG LI.** Invited presentation, 76th Conference on Glass Problems, GMIC. Alfred University, Am. Ceram. Soc, 02. November 2015
- Einführung in die Materialwissenschaft I. **H. FÖLL.** Skript zur Vorlesung. Christian Albrechts-Universität, 79-83
- **O.V. MAZURIN ; M.V. STRELTSINA ; T.P. SHVAIKO-SHVAIKOVSKAYA.** Handbook of Glass Data A-C. Elsevier, 1983
- **ROBERT D. SHANNON.** Revised Effective Ionic Radii and Systematic Studies of Interatomic Distances in Halides and Chalcogenides. *Acta Cryst.,* 1976, vol. A32, 751-767
- Direct calculation of Young's modulus of glass", "Calculation of bulk modulus, shear modulus and Poisson's ratio of glass. *J. Non-Crystall. Sol.,* 1973
- Topological constraints and the Makishima-Mackenzie model. *J. Non-Crystall. Sol.,* 2015
- **R. BRÜNING.** On the glass transition in vitreous silica by differential thermal analysis measurements. *Journal of Non-Crystalline Solids,* 2003, vol. 330, 13-22
- **GREAVES, G. ; GREER, A. ; LAKES, R. ; ROUXEL, T.** Poisson's ratio and modern materials. *Nature Mater,* 2011, vol. 10, 823-837
- **ALBERTO GARCIA ; MARVON COHEN.** First Principles Ionicity Scales. *Phys. Rev. B,* 1993
- **G. ADAM ; J.H. GIBBS.** On the Temperature Dependence of Cooperative Relaxation Properties in Glass-Forming Liquids. *J. Chem. Phys.,* 1965, vol. 43, 139-145
- **CHARLES AUSTEN ANGELL.** Thermodynamic aspects of the glass transition in liquids and plastic crystals. *Pure & Appl. Chem.,* 1991, vol. 63 (10), 1387-1392
- Modeling of evaporation processes in glass melting furnaces. **JOHANNES ALPHONSIUS CHRISTIANUS VAN LIMPT.** Dissertation. Technische Universiteit Eindhoven, 2007
- **APPLEMAN, D.E. ; CLARK, J.R.** Crystal structure of reedmergnerite, a boron albite, and its relation to feldspar crystal chemistry. *Am. J. Sci.,* 1965, vol. 50, 1827-1850
- *Mineralogical Magazine,* 1993, vol. 57, 157-164
- *American Mineralogist,* 1996, vol. 81, 1344-1349
- **J.W. GREIG.** Immiscibility in silicate melts. *Am. J. Sci.,* 1927, vol. 13, 1-44, 133-154

- **DAVID PEARSON, A. ; PASTEUR, G.A. ; NORTHOVER, W.R.** Determination of the absorptivity of OH in a sodium borosilicate glass. *J Mater Sci,* 1979, vol. 14, 869-872, https://doi.org/10.1007/BF00550718